# EUROPEAN PATENT SPECIFICATION

(11) **EP 4 427 879 B1**
(45) Date of publication and mention of the grant of the patent: **01.10.2025**
(21) Application number: 24161124.3
(22) Date of filing: 04.03.2024
(51) Int. Cl.: B23Q 11/00, B23Q 11/02

(54) **CUTTING MACHINE**
SCHNEIDEMASCHINE
MACHINE DE COUPE

(30) Priority: 07.03.2023 JP 2023034417
(43) Date of publication of application: 11.09.2024
(73) Proprietor: DGSHAPE Corporation, Hamamatsu-shi, Shizuoka 431-2103 (JP)
(72) Inventor: Dodo, Shinpei, Shizuoka, 431-2103 (JP); Sakurai, Takayuki, Shizuoka, 431-2103 (JP)
(74) Representative: Grünecker Patent- und Rechtsanwälte PartG mbB

(56) References cited:
- JP-A- 2017 094 436
- JP-A- S5 937 031

## Description

### BACKGROUND OF THE INVENTION

### 1. Field of the Invention

The present invention relates to cutting machines.

### 2. Description of the Related Art

In Japanese Laid-open Patent Publication No. 2021-130163, for example, a machine tool that processes a workpiece using a clamped cutting tool is disclosed. The machine tool can make the cutting tool unclamped and includes a tool magazine that stores the cutting tool when the cutting tool is in an unclamped state.

The machine tool disclosed in Japanese Laid-open Patent Publication No. 2021-130163 is configured to perform a cleaning operation on the cutting tool in an unclamped state in accordance with material information of the workpiece. For example, the machine tool performs a cleaning operation on the cutting tool stored in the tool magazine in accordance with the material information of the workpiece. Thus, cutting powder attached to the cutting tool in an unclamped state can be removed.

Incidentally, in such a machine tool, a so-called dummy pin can be clamped at other times than during processing of a workpiece. The dummy pin is clamped for various applications and, for example, in performing a cleaning operation of removing cutting powder attached to the workpiece, the dummy pin can be clamped. In a state where the dummy pin is clamped as described above, if cutting powder is attached to the dummy pin, in storing the dummy pin in a tool holder of a tool magazine or attaching and removing the dummy pin to and from the tool holder, the cutting powder is caught and it is difficult to store the dummy pin in the tool holder or attach and remove the dummy pin from the tool holder in some cases. Moreover, when the dummy pin with the cutting powder attached thereto is brought into contact with a sensor, the cutting powder touches the sensor and thus error detection is caused in some cases. Therefore, the cutting powder attached to the dummy pin is preferably removed as much as possible. JP 2017 094436 A discloses a cutting machine capable of properly removing a machining tool from a spindle when automatically exchanging the machining tool, and a method for removing the machining tool. A control device of the cutting machine includes: a release section which releases gripping of a machining tool by a spindle; a determination section which determines that the spindle grips the machining tool when receiving a detection signal which is transmitted by a detection mechanism and has the effect that the machining tool is gripped by the spindle after releasing the gripping of the machining tool by the spindle; and a removal control section which reciprocates the spindle in a horizontal direction by a prescribed number of times and a prescribed length in a state that the machining tool gripped by the spindle is stored in a stocker when it is determined that the spindle 30 grips the machining tool. JP S59 37031 A discloses a cutting machine comprising a contact body and a cleaning controller configured to execute tool cleaning by rotating, in a state where the tool gripped by the gripping portion is brought into contact with the contact body, the tool together with the gripping portion by the spindle.

### SUMMARY OF THE INVENTION

Example embodiments of the present invention provide cutting machines in each of which cutting powder attached to a dummy pin gripped by a gripping portion can be easily removed.

The invention is a cutting machine according to claim 1. Preferred embodiments are set out in the dependent claims. Disclosed herein is a cutting machine that includes a housing, a gripping portion, a spindle, a contact body, a position adjuster, and a controller. The housing includes a cutting room in which a cutting object is cut. The gripping portion selectively grips one of a cutting tool that cuts the cutting object and a dummy pin that does not cut the cutting object and is arranged in the cutting room. The spindle rotates the gripping portion around an axis line. The contact body is in the cutting room and capable of contacting the dummy pin gripped by the gripping portion. The position adjuster changes a relative positional relationship between the gripping portion and the contact body. The controller is configured or programmed to include a dummy pin cleaning controller configured or programmed to execute dummy pin cleaning by rotating, in a state where the dummy pin gripped by the gripping portion is brought into contact with the contact body, the dummy pin together with the gripping portion by the spindle.

According to the cutting machine, the dummy pin cleaning controller of the controller is configured or programmed to cause the spindle to rotate the dummy pin gripped by the griping portion in a state where the dummy pin is brought into contact with the contact body. Accordingly, cutting powder attached to the dummy pin can be easily removed.

### BRIEF DESCRIPTION OF THE DRAWINGS

FIG. 1 is a perspective view of a cutting machine according to an example embodiment of the present invention.
FIG. 2 is a plan view of a cutting object and an adapter.
FIG. 3 is a longitudinal cross-sectional view of the cutting machine when viewed from left.
FIG. 4 a longitudinal cross-sectional view of the cutting machine when viewed from right.
FIG. 5 is a plan view of a work holder.
FIG. 6 is a longitudinal cross-sectional view of the cutting machine during replacement of the adapter.
FIG. 7 is a perspective view of a cutting device room and a driving device room.
FIG. 8 is a plan view of a tool stocker.
FIG. 9 is a partially broken side view around a lower end portion of a main shaft.
FIG. 10 is a side view around a tip end portion of a cutting device during replacement of a cutting tool.
FIG. 11 is a block diagram of the cutting machine.
FIG. 12 is a perspective view illustrating a dummy pin.
FIG. 13 is a perspective view illustrating the work holder when being rotated from a home attitude by 180 degrees around an A axis.
FIG. 14 is a side view around the tip end portion of the cutting device during dummy pin cleaning, illustrating a state where the dummy pin is in contact with a contact body.
FIG. 15 is a flowchart illustrating steps in which dummy pin cleaning.

### DETAILED DESCRIPTION OF THE EXAMPLE EMBODIMENTS

With reference to the attached drawings, cutting machines according to example embodiments will be described below. Note that, as a matter of course, example embodiments described herein are not intended to be particularly limiting of the present invention. Also, elements and portions that have the same function are denoted by the same reference symbol and redundant description will be omitted or simplified, as appropriate.

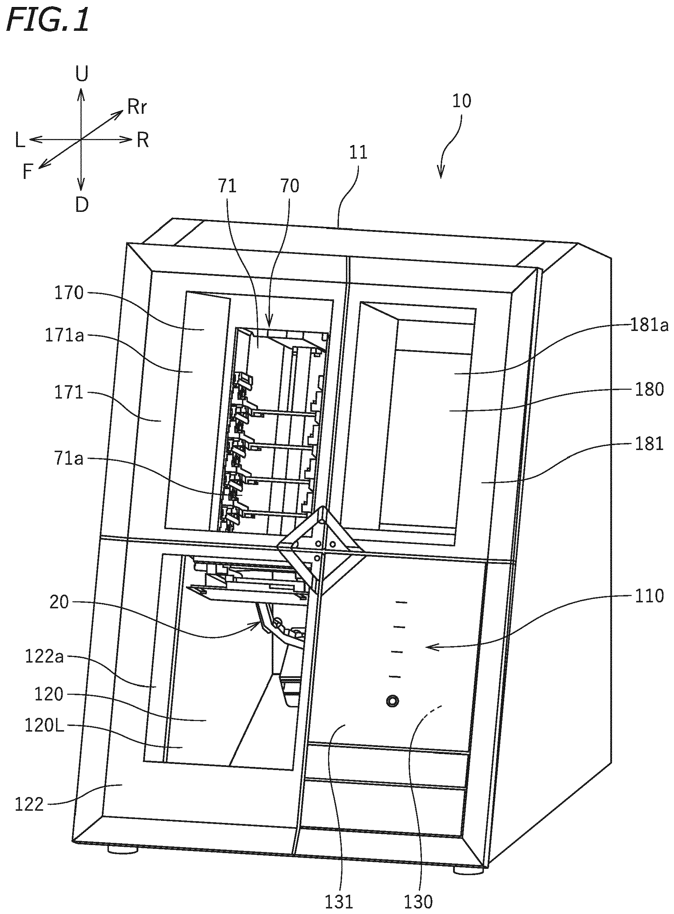

FIG. 1 is a perspective view of a cutting machine 10 according to an example embodiment. In the following description, when the cutting machine 10 is viewed from a front, a direction away from the cutting machine 10 will be referred to as front and a direction toward the cutting machine 10 will be referred to as a rear. The terms left, right, up, and down refer to these directions when the cutting machine 10 is viewed from the front. The reference signs F, Rr, L, R, U and D as used in the drawings refer to front, rear, left, right, up, and down, respectively.

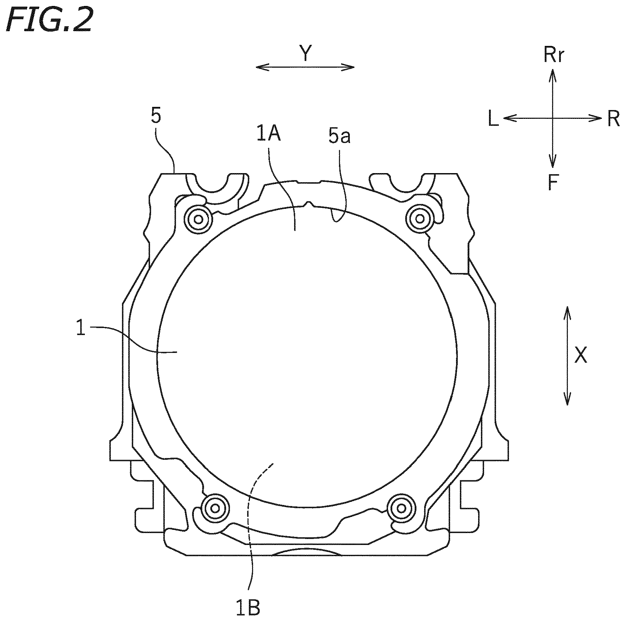

The cutting machine 10 according to this example embodiment may be a cutting machine that cuts a disk-shaped cutting object held by an adapter, for example. FIG. 2 is a plan view of a cutting object 1 and an adapter 5. The cutting machine 10 according to this example embodiment may be an apparatus that cuts the cutting object 1 to produce an object, such as a dental molded article that is, for example, a dental prosthesis, such as a crown, a bridge, a coping, an inlay, an onlay, a veneer, a custom abutment, or the like, an artificial tooth, a denture base, or the like. The cutting machine 10 is a dental processing machine used in a so-called dental field. However, there is no particular limitation on an object produced by the cutting machine 10 and a field in which the cutting machine 10 is used. The cutting machine 10 according to this example embodiment may be a dry type cutting machine that does not use a coolant, for example.

The cutting object 1 may be formed of, for example, resin, such as PMMA, PEEK, glass fiber enforced resin, hybrid resin, or the like, a ceramic material, such as glass ceramic, zirconia, or the like, a metal material, such as cobalt-chromium or the like, wax, plaster, or the like. When zirconium is used as a material of the cutting object 1, for example, semi-sintered zirconium is used. The cutting object 1 is a flat plate-shaped cutting object having two surfaces opposed to each other. Herein, the cutting object 1 has a disk shape (circular plate-shaped). However, the cutting object 1 may have some other shape, for example, a block-like shape (for example, a cubic shape or a rectangular parallelepiped shape) or the like. Hereinafter, the two surfaces of the cutting object 1 that are opposed to each other will be also referred to a first surface 1A and a second surface 1B. The second surface 1B is a back surface of the first surface 1A. The first surface 1A and the second surface 1B are distinguished from each other for convenience but, in this example embodiment, the first 1A and the second surface 1B of the cutting object 1 before being processed are the same. However, the first surface 1A and the second surface 1B of the cutting object 1 before being processed may be configured to be distinguishable.

The adapter 5 holds the disk-shaped cutting object 1. The adapter 5 is herein a flat plate-shaped adapter in which an approximately circular insertion hole adapter 5a corresponding to the cutting object 1 is formed in a central portion. The cutting object 1 is inserted in the insertion hole adapter 5a, and thus, is held by the adapter 5. The cutting object 1 is accommodated in the cutting machine 10 as being held by the adapter 5 and is cut.

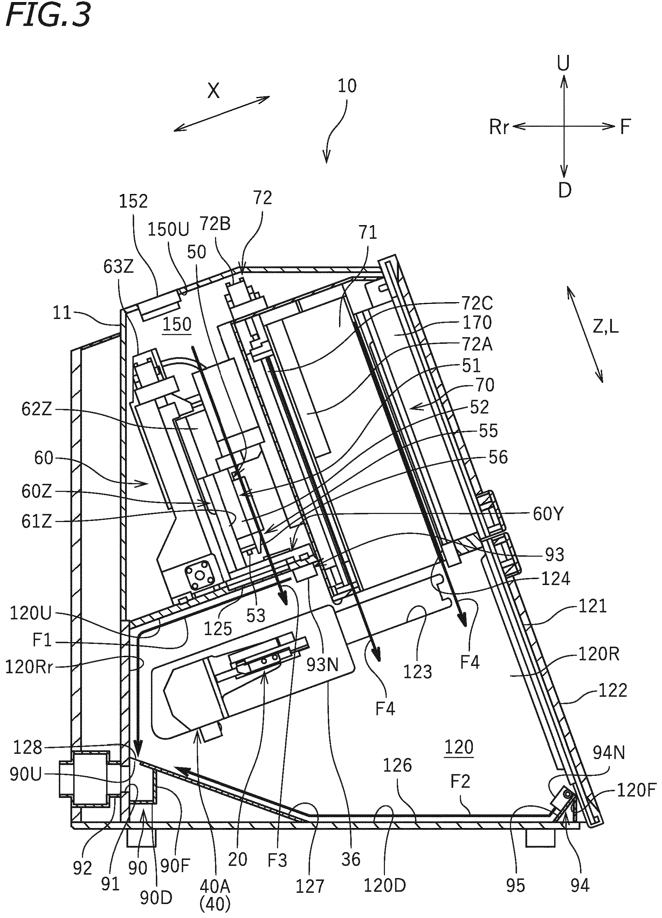

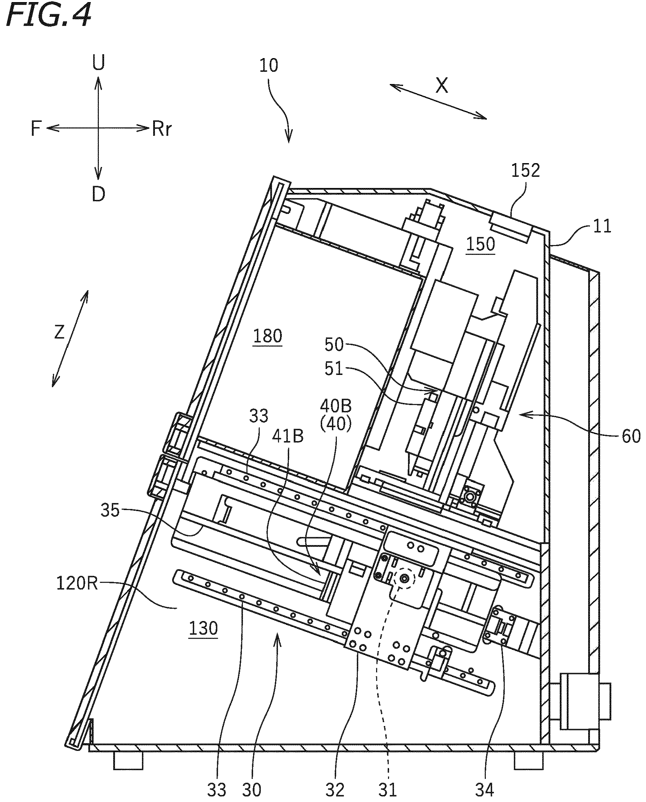

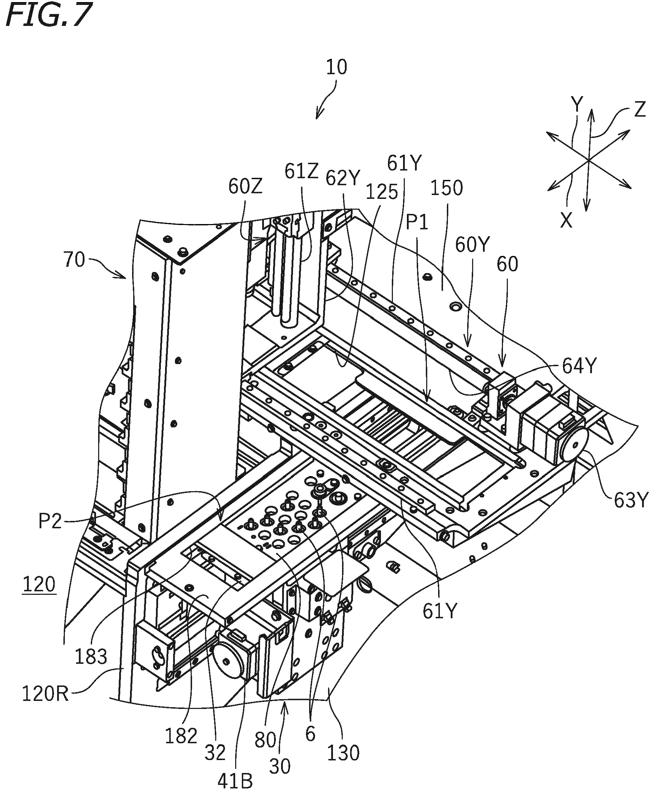

As illustrated in FIG. 1, the cutting machine 10 includes a housing 11 formed into a box shape. FIG. 3 is a longitudinal cross-sectional view of the cutting machine 10 when viewed from left. FIG. 4 is a longitudinal cross-sectional view of the cutting object 1 when viewed from right. As illustrated in FIG. 1, inside of the housing 11 is divided into a plurality of spaces including a cutting room 120 (also see FIG. 3) in which a work holder 20 that holds the adapter 5 is accommodated, a driving device room 130 in which a holder moving device 30 (see FIG. 4) that moves the work holder 20 is accommodated, a changer room 170 in which a work changer 70 is accommodated, and a tool replacement room 180 used for storing a cutting tool 6 (see FIG. 7) in a tool stocker 80 (also see FIG. 7).

As illustrated in FIG. 1, the cutting room 120 is arranged in a lower left portion of the housing 11. As illustrated in FIG. 3, the cutting room 120 extends to a rear end portion of the housing 11. The changer room 170 is arranged above a portion of the cutting room 120 in a front side. The changer room 170 extends to a central portion of the housing 11 in a front-rear direction. As illustrated in FIG. 1, the driving device room 130 is arranged to right of the cutting room 120. As illustrated in FIG. 4, the driving device room 130 extends to the rear end portion of the housing 11. The tool replacement room 180 is arranged above a portion of the driving device room 130 at the front side. The tool replacement room 180 extends to the central portion of the housing 11 in the front-rear direction. Note that the driving device room 130 may be arranged to left of the cutting room 120. In that case, the tool replacement room 180 may be arranged to left of the changer room 170.

A cutting room door 122 is provided at a front surface opening portion 121 (see FIG. 3) of the cutting room 120 to freely open and close the front surface opening portion 121. A driving device room cover 131 (see FIG. 1) is provided at a front surface opening portion of the driving device room 130. A changer room door 171 (see FIG. 1) is provided at a front surface opening portion of the changer room 170 to freely open and close the front surface opening portion of the changer room 170. A tool replacement room door 181 (see FIG. 1) is provided at a front surface opening portion of the tool replacement room 180 to freely open and close the front surface opening portion of the tool replacement room 180. As illustrated in FIG. 1, transparent window portions 122a, 171a, and 181a are provided to the cutting room door 122, the changer room door 171, and tool replacement room door 181, respectively, to allow visual confirmation of inside of the cutting room door 122, the changer room door 171, and tool replacement room door 181, respectively. An operation panel 110 is provided on a front surface of the driving device room cover 131. As illustrated in FIG. 3 and FIG. 4, a front surface of the housing 11 (herein, the front surface opening portions of the cutting room 120, the driving device room 130, the changer room 170, and the tool replacement room 180) is diagonal relative to a bottom surface. The front surface of the housing 11 is inclined rearwardly.

As illustrated in FIG. 3 and FIG. 4, a cutting device room 150 in which a cutting device 50 and a main shaft moving device 60 that moves the cutting device 50 (as will be described later, the cutting device 50 includes a main shaft 51 including a spindle 52 that rotates) are accommodated is arranged above the cutting room 120 and the driving device room 130 and in rear of the changer room 170 and the tool replacement room 180. The cutting device room 150 occupies an almost entire width of the housing 11 in a left-right direction.

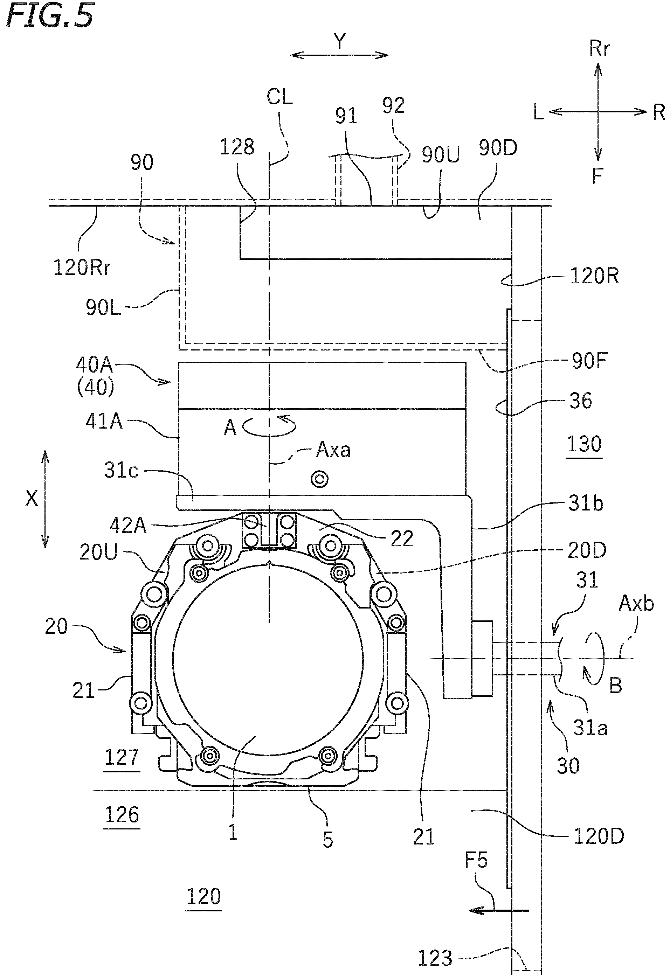

The work holder 20 holds the cutting object 1 via the adapter 5 herein. However, the work holder 20 may be configured to directly hold the cutting object 1, not via some other member. FIG. 5 is a plan view of the work holder 20. As illustrated in FIG. 5, the work holder 20 includes a pair of pinching arms 21 and a coupling portion 22. The pair of pinching arms 21 are a pair of left and right pinching arms. The adapter 5 is inserted between the pair of pinching arms 21 and thus is held by the work holder 20. The pair of pinching arms 21 pinch the cutting object 1.

The coupling portion 22 couples the pair of the pinching arms 21. Herein, the coupling portion 22 is arranged in rear of the pair of pinching arms 21 and is configured to couple rear end portions of the pair of pinching arms 21. The coupling portion 22 extends in the left-right direction.

The holder moving device 30 supports and moves the work holder 20. In this example embodiment, the holder moving device 30 moves the work holder 20 in the front-rear direction. More specifically, as illustrated in FIG. 4, the holder moving device 30 moves the work holder 20 diagonally in the front-rear direction to lower the work holder 20 rearwardly. When the work holder 20 is moved forward by the holder moving device 30, the work holder 20 also moves upward. When the work holder 20 is moved rearward by the holder moving device 30, the work holder 20 also moves downward. As illustrated in FIG. 4, a direction in which the work holder 20 is moved by the holder moving device 30 will be hereinafter also referred to as an X-axis direction. Hereinafter, unless otherwise needed to be stated, a front side in the X-axis direction will be referred to simply as "front" and a rear side in the X-axis direction will be referred to simply as "rear."

As illustrated in FIG. 5, the holder moving device 30 includes a support arm 31 that extends in the left-right direction and supports the work holder 20. As illustrated in FIG. 4, the holder moving device 30 includes an X-axis moving body 32 connected to the support arm 31, a pair of X-axis guide rails 33, an X-axis direction driving motor 34, and a ball screw 35. The holder moving device 30 moves the work holder 20 in the X-axis direction by moving the support arm 31 in the X-axis direction. The holder moving device 30 is at least partially accommodated in the driving device room 130. Herein, some of the X-axis moving body 32, the pair of X-axis guide rails 33, the X-axis direction driving motor 34, the ball screw 35, and the support arm 31 of the holder moving device 30 are accommodated in the driving device room 130.

As illustrated in FIG. 4, the pair of X-axis guide rails 33 extend in the X-axis direction. The X-axis moving body 32 is slidably engaged with the pair of X-axis guide rails 33. The X-axis moving body 32 can move in the X-axis direction along the X-axis guide rails 33. The ball screw 35 extends in the X-axis direction. The ball screw 35 is engaged with a nut provided on the X-axis moving body 32. The X-axis direction driving motor 34 rotates the ball screw 35 around an axis line. When the X-axis direction driving motor 34 is driven to rotate the ball screw 35, the X-axis moving body 32 moves in the X-axis direction along the X-axis guide rails 33. Note that the holder moving device 30 is not limited to a holder moving device having a ball screw mechanism and, for example, may include a timing belt or a wire.

The holder moving device 30 is configured to move, when the cutting object 1 held by the work holder 20 is cut by the cutting device 50, the work holder 20 in a predetermined range in the X-axis direction. The predetermined range in the X-axis direction will be hereinafter also referred to as a "moving range during cutting." FIG. 3 illustrates a state where the work holder 20 is positioned in the moving range during cutting.

As illustrated in FIG. 5, the support arm 31 includes a rotating shaft 31a that rotates around an axis line Axb extending in the left-right direction, a first arm 31b that is connected to the rotating shaft 31a orthogonally to the axis line Axb and rotates together with the rotating shaft 31a in the front-rear direction, and a second arm 31c connected to the first arm 31b in parallel to the axis line Axb (orthogonally to the first arm 31b). As illustrated in FIG. 4, a B-axis rotating motor 41B that rotates the rotating shaft 31a around the axis line Axb is provided in the X-axis moving body 32. The support arm 31 and the B-axis rotating motor 41B define a portion of a rotating device 40 that changes an attitude of the work holder 20 by rotating the work holder 20. When the B-axis rotating motor 41B is driven and the rotating shaft 31a rotates, the work holder 20 rotates in the front-rear direction. Hereinafter, an extension direction of the axis line Axb will be also referred to as a B-axis direction and rotating around the axis line Axb will be also expressed as rotating around the B-axis. Of the rotating device 40, a device that rotates the work holder 20 around the B-axis will be also referred to as a "B-axis rotating device 40B."

As illustrated in FIG. 5, the rotating device 40 also includes an A-axis rotating device 40A that rotates the work holder 20 in the left-right direction. The A-axis rotating device 40A includes an A-axis rotating motor 41A and a rotating shaft 42A. The A-axis rotating motor 41A is fixed to the second arm 31c. The rotating shaft 42A is connected to the A-axis rotating motor 41A and extends in the front-rear direction along an axis line Axa. When the A-axis rotating motor 41A is driven, the rotating shaft 42A rotates around the axis line Axa. Hereinafter, an extension direction of the axis line Axa will be also referred to as an A-axis direction and rotating around the axis line Axa will be also expressed as rotating around the A-axis. In this example embodiment, the rotating shaft 42A is connected to the work holder 20 and, more specifically, is connected to a central portion of the coupling portion 22.

The cutting room 120 is partitioned by a plurality of wall portions and accommodates the work holder 20. As illustrated in FIG. 3, the plurality of wall portions includes a bottom wall 120D, a left side wall 120L (see FIG. 1), a right side wall 120R, a rear wall 120Rr, a front wall 120F, and an upper wall 120U. The plurality of wall portions 120D, 120L, 120R, 120Rr, 120F, and 120U are defined by a metal plate. The bottom wall 120D is arranged lower than the work holder 20 and defines a bottom surface of the cutting room 120. The bottom wall 120D is configured to be approximately horizontal when the cutting machine 10 is set on a horizontal plane. The upper wall 120U is arranged above the work holder 20 and defines an upper surface of the cutting room 120. Each of the left side wall 120L, right side wall 120R, the rear wall 120Rr, and the front wall 120F is provided upright to connect the upper wall 120U and the bottom wall 120D. The left side wall 120L is connected to a left end portion of the bottom wall 120D and extends upward. The left side wall 120L is provided upright in a portion further to left than the work holder 20. The right side wall 120R is connected to a right end portion of the bottom wall 120D and extends upward. The right side wall 120R is provided upright in a position further to right than the work holder 20. The rear wall 120Rr is connected to a rear end portion of the bottom wall 120D and extends upward. A left end portion and a right end portion of the rear wall 120Rr are connected to a rear end portion of the left side wall 120L and a rear end portion of the right side wall 120R, respectively. The rear wall 120Rr is provided upright in a position further rearward than the work holder 20. The front wall 120F is connected to a front end portion of the bottom wall 120D and extends diagonally upward. The front wall 120F is provided upright in a position further forward than the work holder 20. The front wall 120F extends to be inclined rearwardly. An extension direction of the front wall 120F is a direction orthogonal to the X-axis direction. A left end portion and a right end portion of the front wall 120F are connected to a front end portion of the left side wall 120L and a front end portion of the right side wall 120R, respectively. The upper wall 120U extends in a direction orthogonal to the front wall 120F, that is, in parallel to the X-axis direction. The upper wall 120U is downwardly inclined toward the rear side. The upper wall 120U is provided in non-parallel to the bottom wall 120D. A front end portion, a left end portion, a right end portion, and a rear end portion of the upper wall 120U are connected to an upper end portion of the front wall 120F, an upper end portion of the left side wall 120L, an upper end portion of the right side wall 120R, and an upper end portion of the rear wall 120Rr, respectively.

The front surface opening portion 121 is formed in the front wall 120F of the cutting room 120. As described above, the cutting room door 122 is provided at the front surface opening portion 121 to open and close the front surface opening portion 121. The front surface opening portion 121 extends upward from a position above a lower end of the front wall 120F. A portion around the lower end of the front wall 120F is a corner portion that is not opened to outside.

The right side wall 120R partitions between the cutting room 120 and the driving device room 130. The right side wall 120R of the cutting room 120 is also a left side wall of the driving device room 130. As illustrated in FIG. 3, a slit 123 that extends in the X-axis direction and through which the support arm 31 of the holder moving device 30 passes is formed in the right side wall 120R. The slit 123 is an opening portion through which the support arm 31 is inserted. A dust-proof plate 36 that prevents cutting powder generated in the cutting room 120 from entering the driving device room 130 is fixed to the support arm 31. The dust-proof plate 36 is provided to cover at least a portion of the slit 123 and moves with the support arm 31 in the X-axis direction. The dust-proof plate 36 is fixed to a portion of the support arm 31 located in the cutting room 120 and is provided in the cutting room 120. Herein, the dust-proof plate 36 is configured to cover a different portion of the slit 123 in accordance with a position of the support arm 31 in the X-axis direction.

As illustrated in FIG. 3, the dust-proof plate 36 is configured to cover an end portion of the slit 123 in the rear side when the work holder 20 is positioned in the moving range during cutting. At this time, an end portion of the slit 123 in the front side is not covered by the dust-proof plate 36 and is opened. The dust-proof plate 36 is also configured to be positioned further rearward than the end portion of the slit 123 in the front side when the work holder 20 is positioned in the moving range during cutting. The dust-proof plate 36 is configured such that, the further the support arm 31 moves rearward, the larger an open portion of the slit 123 in the front side becomes. This is because there is a tendency that the cutting powder is gathered in a portion further rearward than the work holder 20 by a wind flow in the cutting room 120 and there is only a small amount of cutting powder in a portion located further forward than the work holder 20. Thus, a length of the dust-proof plate 36 is reduced, so that an increase in a length of the cutting room 120 forward is reduced or prevented. Note that a portion of the slit 123 in the front side is opened regardless of a position of the work holder 20. Since the portion of the slit 123 in the front side is opened, a wind flow from the driving device room 130 toward the cutting room 120 is generated. Thus, entrance of the cutting powder or the like in the cutting room 120 into the driving device room 130 is reduced or prevented.

As illustrated in FIG. 3, the upper wall 120U partitions between the cutting room 120 and the changer room 170 and also partitions between the cutting room 120 and the cutting device room 150. A front side opening potion 124 that makes the cutting room 120 and the changer room 170 communicate with each other and a rear side opening portion 125 that makes the cutting room 120 and the cutting device room 150 communicate with each other are formed in the upper wall 120U. A portion of the upper wall 120U of the cutting room 120 in the front side is also a bottom surface of the changer room 170. The front side opening portion 124 is formed under the changer room 170. The front side opening portion 124 is an opening portion through which the cutting object 1 that is transported by a transport device 72 of the work changer 70 can pass. As will be described later, herein, the transport device 72 transports an adapter storing portion 71 in which the adapter 5 is stored to the cutting room 120 from the front side opening portion 124.

A portion of the upper wall 120U of the cutting room 120 in the rear side is also a left side portion of a bottom wall of the cutting device room 150. The rear side opening portion 125 is formed under the cutting device room 150. The rear side opening portion 125 is an opening potion through which at least a portion of the cutting device 50, that is, herein, a lower portion of the main shaft 51, can pass. The rear side opening portion 125 is an opening potion through which the cutting tool 6 and the main shaft 51 pass when the main shaft 51 is moved in a Z-axis direction (see FIG. 3) by a Z-axis direction moving device 60Z that will be described later. As will be described in detail later, the rear side opening portion 125 extends to a point above the driving device room 130 to make the driving device room 130 and the cutting device room 150 communicate with each other (see FIG. 7).

As illustrated in FIG. 3, the bottom wall 120D of the cutting room 120 incudes a bottom portion 126 extending substantially horizontal and a slope 127 connected to a rear end portion of the bottom portion 126 and extends rearward from the rear end portion of the bottom portion 126. The slope 127 is configured to have an upward gradient toward the rear side. The slope 127 and the bottom portion 126 are connected to each other in a bent manner. The slope 127 is connected to the rear wall 120Rr. A space is formed under the slope 127.

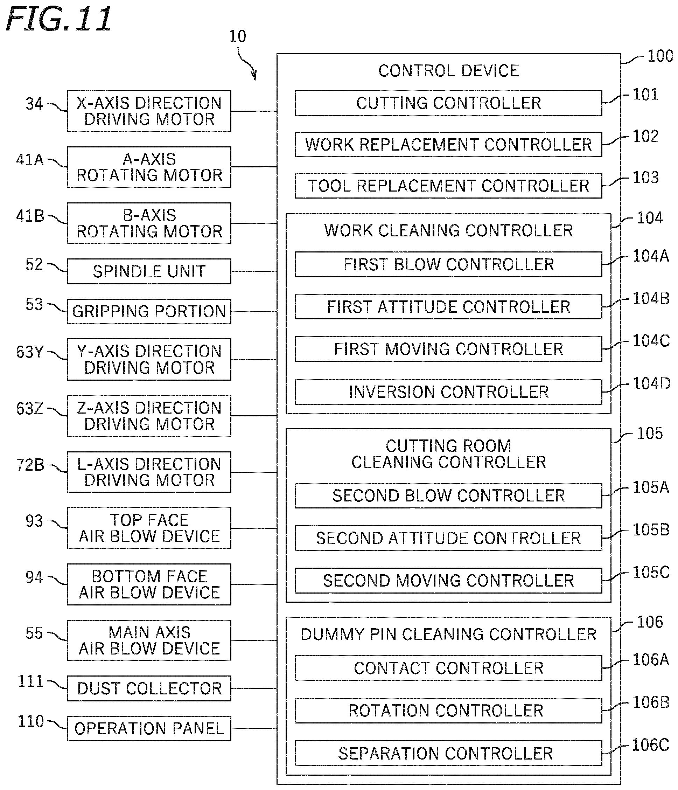

An exhaust port 128 is opened in the bottom wall 120D. A dust collector 111 (see FIG. 11) is connected to the exhaust port 128 via an exhaust duct 92 that will be described later or the like. Air and dust in the cutting room 120 are discharged from the exhaust port 128. The exhaust port 128 is provided in the slope 127. More specifically, the exhaust port 128 is opened along a connection portion of the slope 127 that is connected to the rear wall 120Rr. A rear end of the exhaust port 128 is formed of the rear wall 120Rr. The exhaust port 128 is provided in a rearmost portion of the slope 127. The slope 127 has an upward gradient toward the exhaust port 128.

As illustrated in FIG. 5, the exhaust port 128 is opened in a portion further rearward than the work holder 20. Thus, a wind flow from the front wide to the rear side with the work holder 20 in-between occurs. As illustrated in FIG. 5, when viewed from top, at least a portion of the slope 127 overlaps at least a portion of the work holder 20 (also see FIG. 3). Thus, a piece of the cutting object 1 that has come off from the cutting object 1 by cutting falls on the slope 127. A large piece among the pieces of the cutting object 1 that have fallen on the slope 127 is not sucked in the exhaust port 128 by suction from the exhaust port 128 and slides off on the slope 127. Thus, the large piece among the pieces of the cutting object 1 is selected. Also, when the cutting object 1 falls from the adapter 5, for example, due to a load of cutting, the cutting object 1 that has fallen is not sucked by the exhaust port 128 with suction from the exhaust port 128 and slides off on the slope 127.

As illustrated in FIG. 5, the exhaust port 128 is provided to be shifted from a center line CL (that may not match the A-axis and may match the A-axis) in the left-right direction of the cutting chamber 120 to right. In other words, the exhaust port 128 is provided to be shifted from the central line CL of the cutting room 120 in the left-right direction toward the driving device room 130. Thus, dust or the like near the driving device room 130 is selectively discharged. The exhaust port 128 is one slit opened upward. The exhaust port 128 is formed in a substantially rectangular shape in which a length in the left-right direction is larger than a length in the front-rear direction.

As illustrated in FIG. 3, in this example embodiment, a dust collecting chamber 90 is provided under the exhaust port 128. The dust collecting chamber 90 is fixed to a lower surface of the slope 127. The dust collecting chamber 90 is a box-shaped member with an upper side opened and an upper side opening portion 90U that is opened upward is connected to the exhaust port 128. As illustrated in FIG. 3 and FIG. 5, the dust collecting chamber 90 incudes the upper side opening portion 90U, a bottom wall 90D, a front wall 90F, and a left wide wall 90L. A rear wall and a right side wall of the dust collecting chamber 90 are formed of the rear wall 120Rr and the right side wall 120R of the cutting room 120, respectively. However, the dust collecting chamber 90 may include a rear wall and a right side wall that are not shared with the cutting room 120. An internal space is formed in the dust collecting chamber 90 by the bottom wall 90D, the front wall 90F, the left wide wall 90L, the rear wall 120Rr of the cutting room 120, and the right side wall 120R of the cutting room 120. As illustrated in FIG. 5, the internal space of the dust collecting chamber 90 is larger than the exhaust port 128 when viewed from top.

The upper side opening portion 90U and a duct connection hole 91 are formed in the dust collecting chamber 90. The duct connection hole 91 is an opening portion to which the exhaust duct 92 is connected. As illustrated in FIG. 3, the cutting machine 10 includes the exhaust duct 92 connected to the duct connection hole 91. Herein, the duct connection hole 91 is opened in the rear wall of the dust collecting chamber 90 (the rear wall 120Rr of the cutting room 120). An opening direction of the upper side opening portion 90U (the exhaust port 128) and an opening direction of the duct connection hole 91 intersect with each other. However, the duct connection hole 91 may be opened in another side wall of the dust collecting chamber 90 (for example, the right side wall 120R). A front end portion of the exhaust duct 92 is connected to the duct connection hole 91. The exhaust duct 92 communicates with the exhaust port 128 and the cutting room 120 via the dust collecting chamber 90. A rear end portion of the exhaust duct 92 extends to outside of the cutting machine 10. The dust collector 111 (see FIG. 11) is connected to the rear end portion of the exhaust duct 92. As illustrated in FIG. 5, each of the dust collecting chamber 90 and the exhaust duct 92 is provided to be shifted from the central line CL of the cutting room 120 in the left-right direction to right, in other words, shifted from the central line CL of the cutting room 120 in the left-right direction toward the driving device room 130.

As illustrated in FIG. 3, a top surface nozzle 93N of a top surface air blower 93 is provided in the upper wall 120U of the cutting room 120. The top surface air blower 93 blows air along the upper wall 120U of the cutting room 120 and sends the blown air to the exhaust port 128 via the rear wall 120Rr, thereby cleaning the upper wall 120U and the right side wall 120R of the cutting room 120. The top surface air blower 93 includes an unillustrated pipe connected to an external air compressor or the like, an unillustrated valve that controls a flow of air, and the top surface nozzle 93N that blows air along the upper wall 120U of the cutting room 120. As indicated by an arrow F1 in FIG. 3, the top surface nozzle 93N blows air such that the air moves along the upper wall 120U and the rear wall 120Rr of the cutting room 120 to reach the exhaust port 128. In this example embodiment, the exhaust port 128 is opened along a connection portion of the bottom wall 120D (more specifically, the slope 127) with the rear wall 120Rr. Therefore, the air blown from the top surface nozzle 93N is smoothly sent to the exhaust port 128.

Although a plan view is not illustrated, the top surface nozzle 93N is provided in a position that matches a position of the exhaust duct 92 with respect to the left-right direction. Accordingly, the top surface nozzle 93N is also provided to be shifted from the central line CL of the cutting room 120 in the left-right direction to right. In other words, the top surface nozzle 93N is provided to be shifted from the central line CL of the cutting room 120 in the left-right direction toward the driving device room 130. The top surface nozzle 93N can blow air toward the cutting device 50 when the cutting device 50 protrudes into the cutting room 120. Herein, the top surface nozzle 93N blows air such that the air passes under the rear side opening portion 125 of the upper wall 120U. Thus, the lower portion of the main shaft 51 of the cutting device 50 and the cutting tool 6 that have moved into the cutting room 120 through the rear side opening portion 125 are cleaned.

As illustrated in FIG. 3, the cutting machine 10 further includes a bottom surface air blower 94 including a bottom surface nozzle 94N. The bottom surface nozzle 94N blows air such that the air moves along the bottom wall 120D of the cutting room 120 to reach the exhaust port 128. The bottom surface air blower 94 cleans the bottom wall 120D of the cutting room 120 by sending the blown air to the exhaust port 128 along the bottom wall 120D of the cutting room 120. The bottom surface air blower 94 includes an unillustrated pipe connected to the external air compressor or the like, an unillustrated valve that controls an air flow, and the bottom surface nozzle 94N that blows air along the bottom wall 120D of the cutting room 120.

The bottom surface nozzle 94N is provided above the bottom wall 120D. Specifically, as illustrated in FIG. 3, the bottom surface nozzle 94N is fixed to an attachment plate 95 that diagonally extends across between the bottom wall 120D and the front wall 120F of the cutting room 120. As indicated by an arrow F2 in FIG. 3, the bottom surface nozzle 94N blows air diagonally downward toward the bottom wall 120D and toward the exhaust port 128. Herein, the bottom surface nozzle 94N blows air diagonally downward in the rearward direction toward the bottom wall 120D. Thus, air that has collided with the bottom wall 120D spreads in the left-right direction. As a result, even when a width of the bottom surface nozzle 94N in the left-right direction is not made large, a wide range in the left-right direction in the bottom wall 120D can be cleaned. In this example embodiment, the bottom surface nozzle 94N is provided in a central portion of the cutting room 120 in the left-right direction. However, the bottom surface nozzle 94N may be provided to be shifted from the central line CL of the cutting room 120 in the left-right direction to either right or left.

The work changer 70 is configured to store a plurality of cutting objects 1 and is used for replacing the cutting object 1 that is to be processed. As illustrated in FIG. 3, the work changer 70 includes the adapter storing portion 71 that can store the plurality of cutting objects 1 (herein, adapters 5 to which the cutting objects 1 are attached, see FIG. 2) and the transport device 72 that transports the adapter storing portion 71 to the cutting room 120. For example, except when replacement of the cutting object 1 is performed, the adapter storing portion 71 is accommodated in the changer room 170. As illustrated in FIG. 1, a plurality of shelves or storage spaces 71a each of which stores one adapter 5 are provided in the adapter storing portion 71. The plurality of storage spaces 71a are arranged in an up-down direction. More specifically, the plurality of storage spaces 71a are arranged in a diagonally up-down direction (which will be hereinafter also referred to as an "L-axis direction," see FIG. 3) orthogonal to the X-axis direction.

As illustrated in FIG. 3, the transport device 72 includes a slide arm 72A that extends in the L-axis direction, an L-axis direction driving motor 72B, and a ball screw 72C. The slide arm 72A is fixed to the adapter storing portion 71 and can extend and contract in the L-axis direction. The ball screw 72C is engaged with the adapter storing portion 71. The L-axis direction driving motor 72B is connected to the ball screw 72C and rotates the ball screw 72C. When the L-axis direction driving motor 72B is driven and thus the ball screw 72C rotates, the slide arm 72A expands and contacts and the adapter storing portion 71 moves in the L-axis direction.

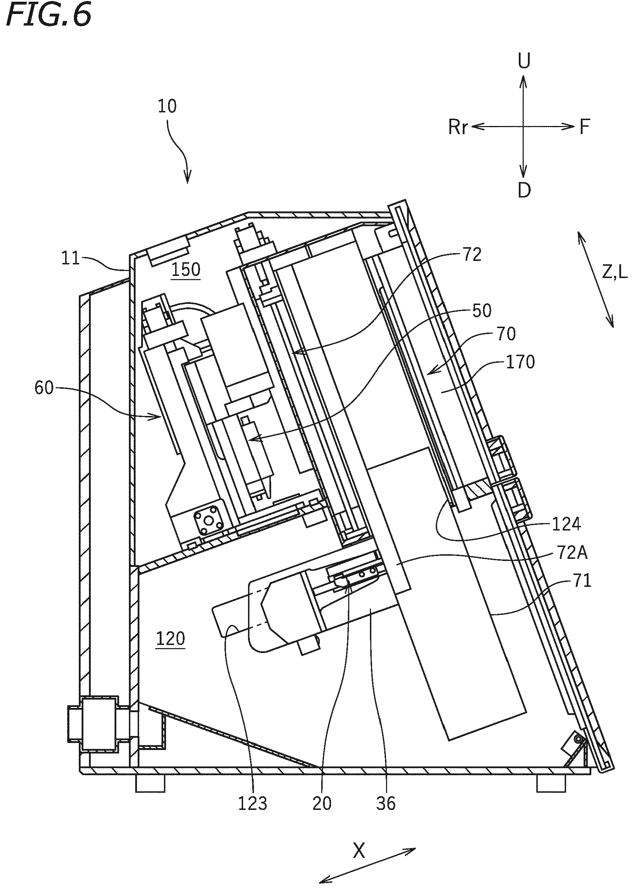

FIG. 6 is a longitudinal cross-sectional view illustrating the cutting machine 10 during replacement of the adapter 5 (see FIG. 2). As illustrated in FIG. 6, in replacing the adapter 5, the adapter storing portion 71 is lowered into the cutting room 120. The adapter storing portion 71 passes through the front side opening portion 124 of the cutting room 120 to move into the cutting room 120. During replacement of the adapter 5, the holder moving device 30 moves the work holder 20 to a position further forward in the X-axis direction than the moving range during cutting. At this time, as illustrated in FIG. 6, the end portion of the slit 123 in the rear side is not covered by the dust-proof plate 36 and is opened. The dust-proof plate 36 is configured to be positioned further forward than the end portion of the slit 123 in the rear side when the work holder 20 is positioned in a point where the cutting object 1 is given and received to and from the work changer 70. Thus, a length of the dust-proof plate 36 is reduced, so that an increase in length of the cutting room 120 rearward is reduced or prevented. As illustrated in FIG. 6, the work holder 20 moves forward in the X-axis direction and enters the storage space 71a (see FIG. 1) of the adapter 5, so that the adapter 5 is held by the work holder 20. Note that, in this example embodiment, the transport device 72 transports the plurality of cutting objects 1 to the cutting room 120 by transporting the adapter storing portion 71 to the cutting room 120, but a configuration of the transport device 72 is not limited thereto. The transport device 72 may be configured to transport at least one of the plurality of cutting objects 1 stored in the adapter storing portion 71 to the cutting room 120. For example, the transport device 72 may be configured to grip the cutting object 1 in the storage space 71a of the fixed adapter storing portion 71 to take out the cutting object 1 and give the taken out cutting object 1 to the work holder 20.

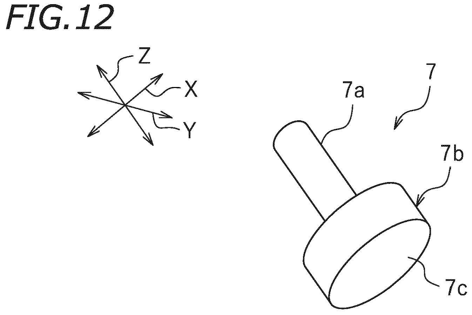

The cutting device 50 and a moving device (herein, the main shaft moving device 60) of the cutting device 50 are accommodated in the cutting device room 150. The cutting device 50 cuts the cutting object 1 held by the work holder 20. As illustrated in FIG. 3, the cutting device 50 and the main shaft moving device 60 are provided above the work holder 20. The cutting device 50 includes the main shaft 51 that grips and rotates the cutting tool 6. The main shaft 51 includes the spindle 52 and a gripping portion 53 provided in a lower end portion of the spindle 52. The spindle 52 extends in a direction orthogonal to the X-axis direction (herein, in parallel to the L-axis direction). This direction will be hereinafter also referred to as the "Z-axis direction." The spindle 52 rotates the gripping portion 53 around an axis line that is in parallel to the Z-axis direction. The gripping portion 53 selectively grips one of the cutting tool 6 or a dummy pin 7 (see FIG. 12) that will be described later such that the cutting tool 6 or the dummy pin 7 protrudes downward in the Z-axis direction. The spindle 52 is herein a unit with a built-in motor. However, the spindle 52 may be connected to, for example, an external motor via a belt or the like. The gripping portion 53 is, for example, an air driving type collet chuck. However, there is no particular limitation on a type of the gripping portion 53.

The main shaft moving device 60 moves the cutting device 50 in the Z-axis direction and in the left-right direction. The left-right direction is a direction orthogonal to the X-axis direction and the Z-axis direction. The left-right direction will be hereinafter also referred to as the "Y-axis direction." The main shaft moving device 60 moves the cutting device 50 in the Y-axis direction and in the Z-axis direction and the holder moving device 30 moves the work holder 20 in the X-axis direction, so that a positional relationship between the cutting tool 6 or the dummy pin 7 and the cutting object 1 three-dimensionally changes. The Z-axis direction is a direction intersecting (orthogonal to) the upper wall 120U of the cutting room 120 and, when the cutting device 50 moves in the Z-axis direction, the cutting device 50 appears in the cutting room 120 or retreats in the cutting device room 150. The main shaft moving device 60 can move the cutting device 50 to a position where at least a portion of the cutting device 50 is arranged above the work holder 20 and below the upper wall 120U.

As illustrated in FIG. 3, the main shaft moving device 60 includes a Y-axis direction moving device 60Y and the Z-axis direction moving device 60Z. The Y-axis direction moving device 60Y moves the cutting device 50 in the Y-axis direction. The Z-axis direction moving device 60Z moves the cutting device 50 in the Z-axis direction. FIG. 7 is a perspective view of the cutting device room 150 and the driving device room 130. In FIG. 7, illustration of some members is omitted so that inside of each of the cutting device room 150 and the driving device room 130 can be seen. As illustrated in FIG. 7, the Y-axis direction moving device 60Y includes a pair of Y-axis guide rails 61Y extending in the Y-axis direction, a Y-axis direction moving body 62Y slidably engaged with the Y-axis guide rails 61Y, a Y-axis direction driving motor 63Y, and a ball screw 64Y. The pair of Y-axis guide rails 61Y are provided on the bottom wall of the cutting device room 150. The pair of Y-axis guide rails 61Y extend to a point above the driving device room 130. The Y-axis direction moving body 62Y can move in the Y-axis direction along the Y-axis guide rails 61Y. The Y-axis direction moving body 62Y can move to a point above the driving device room 130 along the Y-axis guide rails 61Y. The Y-axis direction moving body 62Y supports the Z-axis direction moving device 60Z. The Z-axis direction moving device 60Z supports the cutting device 50 such that the cutting device 50 can move in the Z-axis direction.

As illustrated in FIG. 7, the ball screw 64Y extends in the Y-axis direction. The ball screw 64Y is engaged with the Y-axis direction moving body 62Y. The Y-axis direction driving motor 63Y rotates the ball screw 64Y. When the Y-axis direction driving motor 63Y is driven and the ball screw 64Y rotates, the Y-axis direction moving body 62Y moves in the Y-axis direction along the Y-axis guide rails 61Y. Thus, the Z-axis direction moving device 60Z and the cutting device 50 move in the Y-axis direction.

As illustrated in FIG. 3, the Z-axis direction moving device 60Z includes a pair of Z-axis direction guide shafts 61Z extending in the Z-axis direction, a Z-axis direction moving body 62Z that is slidably engaged with the Z-axis direction guide shafts 61Z and supports the cutting device 50, a Z-axis direction driving motor 63Z, and an unillustrated ball screw. With a similar mechanism as that of the Y-axis direction moving device 60Y to move the Z-axis direction moving device 60Z, the Z-axis direction moving device 60Z moves the cutting device 50 in the Z-axis direction.

Note that, although not illustrated, bellows may be provided at each of left and right of the Y-axis direction moving body 62Y. Each of both ends of the bellow at right is coupled to a corresponding one of a right end of the Y-axis direction moving body 62Y and a right end of the rear side opening portion 125. Each of both ends of the bellow at left is coupled to a corresponding one of a left end of the Y-axis direction moving body 62Y and a left end of the rear side opening portion 125. With the bellows, entrance of dust or the like into the cutting device room 150 from the rear side opening portion 125 is reduced or prevented.

As illustrated in FIG. 3, an inlet port 152 is opened in an upper wall 150U of the cutting device room 150. The inlet port 152 includes a plurality of slits arranged in the left-right direction, herein. However, there is no particular limitation on a shape of the inlet port 152. The inlet port 152 is an opening portion through which outside air is taken into the cutting machine 10 in accordance with discharge of air from the exhaust port 128. The inlet port 152 communicates with the cutting device room 150. Furthermore, the inlet port 152 also communicates with the driving device room 130 and the changer room 170 via the cutting device room 150. The cutting device room 150 and the driving device room 130 are made to communicate with each other through the rear side opening portion 125 opened in the bottom wall of the cutting device room 150 (an upper wall of the driving device room 130). The cutting device room 150 and the changer room 170 communicate with each other without any particular partition. The cutting room 120 communicates with the inlet port 152 via the cutting device room 150 and the driving device room 130. The driving device room 130 and the cutting room 120 are made to communicate with each other through the slit 123 opened in the right side wall 120R of the cutting room 120 (the left side wall of the driving device room 130). The cutting room 120 communicates with the inlet port 152 also via the cutting device room 150 and the changer room 170. The changer room 170 and the cutting room 120 are made to communicate with each other through the front side opening portion 124 opened in the upper wall 120U of the cutting room 120 (a bottom wall of the changer room 170).

The inlet port 152 communicates with the cutting device room 150, the cutting device room 150 and the cutting room 120 are made to communicate with each other through the rear side opening portion 125, and furthermore, the exhaust duct 92 communicates with the cutting room 120, so that, when the dust collector 111 (see FIG. 11) is driven, as illustrated in FIG. 3, a wind flow F3 directing to the cutting room 120 from the inlet port 152 via the cutting device room 150 occurs. An internal pressure of the cutting device room 150 is higher than an internal pressure of the cutting room 120. Accordingly, cutting powder or the like generated in the cutting room 120 is less likely to enter the cutting device room 150. Similarly, the inlet port 152 communicates with the changer room 170 and the changer room 170 and the cutting room 120 are made to communicate with each other via the front side opening portion 124, so that, when the dust collector 111 is driven, as illustrated in FIG. 3, a wind flow F4 directing to the cutting room 120 from the inlet port 152 via the changer room 170 occurs. An internal pressure of the changer room 170 is higher than the internal pressure of the cutting room 120. Accordingly, cutting powder or the like generated in the cutting room 120 is less likely to enter the changer room 170. Furthermore, the inlet port 152 communicates with the driving device room 130 and the driving device room 130 and the cutting room 120 are made to communicate with each other through the slit 123, so that, when the dust collector 111 is driven, as illustrated in FIG. 5, a wind flow F5 directing to the cutting room 120 from the inlet port 152 (see FIG. 3) via the driving device room 130 occurs. An internal pressure of the driving device room 130 is higher than the internal pressure of the cutting room 120. Accordingly, cutting powder or the like generated in the cutting room 120 is less likely to enter the driving device room 130.

As illustrated in FIG. 7, in this example embodiment, the tool stocker 80 is accommodated in the driving device room 130. The tool stocker 80 is configured to store a plurality of cutting tools 6 and the dummy pin 7 (see FIG. 12). The plurality of cutting tools 6 are used properly, for example, in accordance with a material of the cutting object 1 and a type of cutting. As illustrated in FIG. 7, the tool stocker 80 is supported by the X-axis moving body 32. Specifically, the tool stocker 80 is fixed to an upper surface of the X-axis moving body 32. Conventionally, a tool stocker is supported by a support arm of a holder moving device. Therefore, in a known cutting device, a support arm is likely to be bent, and a large load cannot be applied on the cutting object 1 in cutting the cutting object 1. Specifically, in consideration of a load applied by cutting, an amount of cutting per hour is limited or like measurement is taken. In this example embodiment, the tool stocker 80 is supported by the X-axis moving body 32, and thus, a load on thee support arm 31 is reduced.

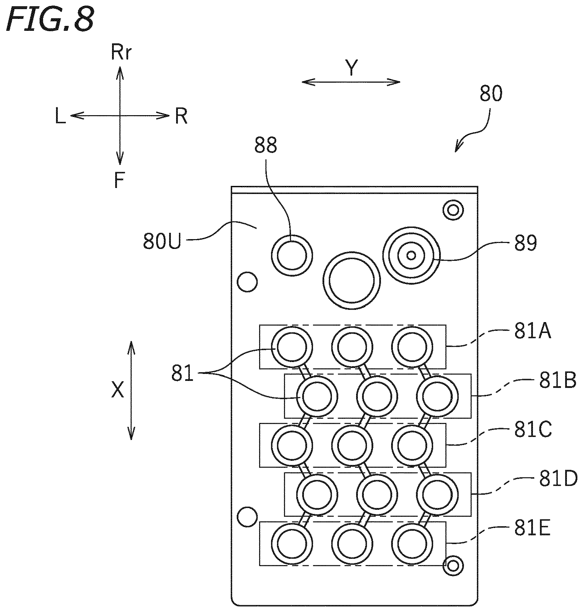

FIG. 8 is a plan view of the tool stocker 80. As illustrated in FIG. 8, the tool stocker 80 includes a plurality of storing holes 81 each of which can store the cutting tool 6. The plurality of storing holes 81 are included in an upper surface 80U of the tool stocker 80 and are recessed downward in the Z-axis direction. As illustrated in FIG. 8, the plurality of storing holes 81 are arranged in a zigzag manner. Specifically, in the tool stocker 80, arrays 81A to 81E in each of which some storing holes 81 among the plurality of storing holes 81 are arranged in a predetermined arrangement direction (herein, in the Y-axis direction) are formed, and positions of two adjacent arrays (for example, the array 81A and the array 81B) of the plurality of arrays 81A to 81E are shifted from each other in the arrangement direction. A shift amount between the positions of the two adjacent arrays in the arrangement direction is equal to or less than a half of a pitch of the storing holes 81 in each of the arrays 81A to 81E. With the above-described zigzag arrangement, the plurality of storing holes 81 are highly densely arranged. As a result, increased storage efficiency of the cutting tools 6 with respect to a space is achieved. Note that every other one of the plurality of arrays 81A to 81E is aligned in the arrangement direction. In this example embodiment, the tool stocker 80 includes a dummy storing hole 88 in which the dummy pin 7 (see FIG. 12) is stored. The dummy storing hole 88 is formed in the upper surface 80U of the tool stocker 80 and is recessed downward in the Z-axis direction.

The tool stocker 80 includes a tool length sensor 89. The tool length sensor 89 detects that the cutting tool 6 or the dummy pin 7 has come into contact. The tool length sensor 89 is provided so as to be exposed at the upper surface 80U of the tool stocker 80. Herein, the tool length sensor 89 is provided to protrude upward from the upper surface 80U of the tool stocker 80. The tool length sensor 89 detects that the cutting tool 6 or the dummy pin 7 has come into contact from above in the Z-axis direction, herein. The tool length sensor 89 includes a switch an on and off state of which is switched, for example, by pressing the switch by the cutting tool 6 or the dummy pin 7, and is configured to measure coordinates at a time when the on and off state of the switch is switched. However, a detection method of the tool length sensor 89 is not limited thereto. The tool length sensor 89 may include, for example, a pressure sensor that detects a pressing force of the cutting tool 6 or the dummy pin 7. The tool length sensor 89 thus can detect that wrong one of the cutting tool 6 and the dummy pin 7 is selected, or that the cutting tool 6 or the dummy pin 7 is broken and has a different length from a registered length.

The cutting device 50 is configured to grip each of the cutting tools 6 stored in the tool stocker 80, and cuts the cutting object 1 held by the work holder 20 with the gripped cutting tool 6. To realize this, the main shaft moving device 60 moves the cutting device 50 between the driving device room 130 and the cutting room 120. The holder moving device 30 moves the tool stocker 80 to a point under the cutting device room 150.

As illustrated in FIG. 3 and FIG. 7, in this example embodiment, the cutting device 50 is provided above the work holder 20 and the tool stocker 80. The Y-axis direction moving device 60Y of the main shaft moving device 60 moves the cutting device 50 in the Y-axis direction such that the cutting device 50 moves between a position above the driving device room 130 and a position above the cutting room 120. The Z-axis direction moving device 60Z of the main shaft moving device 60 moves the cutting device 50 in the up-down direction (herein, the Z-axis direction inclined from a vertical direction). The holder moving device 30 is configured to move the tool stocker 80 to a tool gripping position P1 (see FIG. 7) set under a moving path of the cutting device 50 by the Y-axis direction moving device 60Y. The tool gripping position P1 is a position under the rear side opening portion 125. The cutting device 50 can be made to grip the cutting tool 6 in the tool stocker 80 by moving the tool stocker 80 to the tool gripping position P1 and driving the Z-axis direction moving device 60Z in a state where the cutting device 50 has been moved to a position over the tool gripping position P1 to lower the cutting device 50.

The holder moving device 30 is configured to move the tool stocker 80 to a tool replacement position P2 (see FIG. 7) set in a position further forward than the tool gripping position P1. As illustrated in FIG. 7, the tool replacement position P2 is set under a bottom wall 182 of the tool replacement room 180. The bottom wall 182 of the tool exchange room 180 partitions between the tool replacement room 180 and driving device room 130. As illustrated in FIG. 7, an opening portion 183 that is opened above the tool replacement position P2 is formed in the bottom wall 182 of the tool replacement room 180. The opening portion 183 is an opening used for inserting and removing the cutting tool 6 to and from the tool stocker 80 by a user. The opening portion 183 passes through the bottom wall 182 in the Z-axis direction. When the holder moving device 30 is driven to move the tool stocker 80 to the tool replacement position P2, the user can access the tool stocker 80 through the opening portion 183. With the tool replacement room 180 in which the opening portion 183 is formed, a contact of the user with the holder moving device 30 during replacement of the cutting tool 6 or the like is prevented. With the above-described configuration, entrance of a foreign matter from outside into the driving device room 130 during replacement of the cutting tool 6 or the like is reduced or prevented.

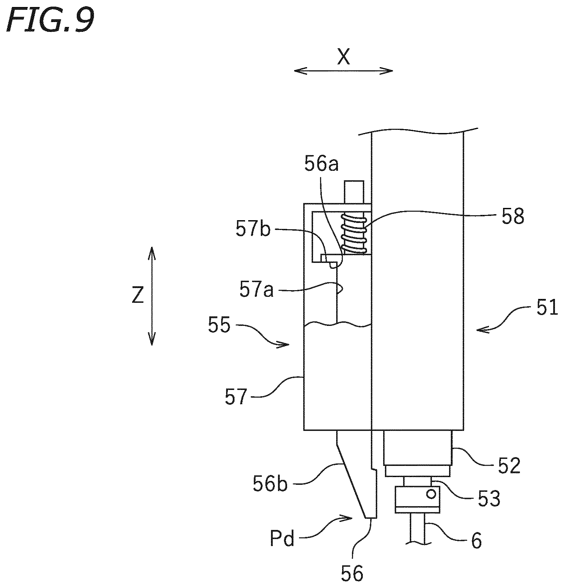

As illustrated in FIG. 3, the cutting machine 10 according to this example embodiment further includes a main axis air blower 55 that is provided in the main shaft 51 and blows air. The main axis air blower 55 includes a main axis nozzle 56 provided at a side of the gripping portion 53 of the main shaft 51. FIG. 9 is a partially broken side view around a lower end portion of the main shaft 51. As illustrated in FIG. 9, the main axis air blower 55 includes the main axis nozzle 56 to which air is blown and a nozzle support member 57 that supports the main axis nozzle 56. The nozzle support member 57 is provided above the gripping portion 53 in the Z-axis direction. The nozzle support member 57 is fixed to a cover that covers the spindle 52, herein. The nozzle support member 57 supports the main axis nozzle 56 such that the main axis nozzle 56 can move in the Z-axis direction. Specifically, the nozzle support member 57 supports the main axis nozzle 56 such that the main axis nozzle 56 can move between an end position Pd in a lower side in the Z-axis direction (a position indicated in FIG. 9, which will be also referred to as a lower side end position Pd) and another position located further upward than the lower side end position Pd. The lower side end position Pd of the main axis nozzle 56 is set at a side of the gripping portion 53. In the lower side end position Pd, the gripping portion 53 and the main axis nozzle 56 are arranged in the X-axis direction.

As illustrated in FIG. 9, the nozzle support member 57 includes a guide hole 57a in which the main axis nozzle 56 is inserted and a stopper 57b that regulates movement of the main axis nozzle 56 to a point lower than the lower side end position Pd. The main axis air blower 55 includes a biasing member 58 that biases the main axis nozzle 56 supported by the nozzle support member 57 and holds the main axis nozzle 56 in the lower side end position Pd. The biasing member 58 may include a coil spring. However, the biasing member 58 is not limited to a coil spring, and may be, for example, an air cylinder or the like. The main axis nozzle 56 includes an abutting portion 56a that abuts on the stopper 57b in the lower side end position Pd. The main axis nozzle 56 is held in the lower side end position Pd by the stopper 57b and the biasing member 58. When the main axis nozzle 56 is pressed upward in the Z-axis direction, the main axis nozzle 56 moves upward in the Z-axis direction along the guide hole 57a against a biasing force of the biasing member 58.

The main axis nozzle 56 is provided above the work holder 20 and is configured to blow air downward (herein, downward in the vertical direction). An air blowing direction of the main axis air blower 55 is a vertically downward direction. Thus, air is diagonally blown to the cutting tool 6 gripped by the gripping portion 53. However, the main axis nozzle 56 may be configured to blow air in some other direction. The main axis nozzle 56 incudes a cut surface 56b formed in a side wall and extending to diagonally intersect the Z-axis direction. The cut surface 56b is inclined so as to gradually approach the gripping portion 53 as proceeding downward in the Z-axis direction. Herein, the cut surface 56b extends diagonally upward from a lower end of the main axis nozzle 56.

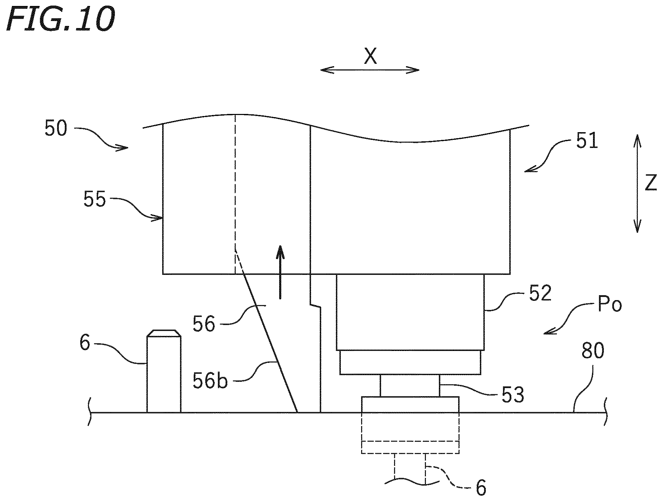

In returning the cutting tool 6 attached to the main shaft 51 to the tool stocker 80 or in attaching the cutting tool 6 of the tool stocker 80 to the main shaft 51, the Z-axis direction moving device 60Z moves the gripping portion 53 to a predetermined position (which will be hereinafter also referred to as a work position Po (see FIG. 10)) in the Z-axis direction set such that the gripping portion 53 grips or releases the cutting tool 6 stored in the tool stocker 80. FIG. 10 is a side view around a tip end portion of the cutting device 50 during replacement of the cutting tool 6. FIG. 10 illustrates a state where the gripping portion 53 is positioned in the work position Po. As illustrated in FIG. 10, the main axis nozzle 56 abuts on the tool stocker 80 in a state where the gripping portion 53 is positioned in the work position Po in the Z-axis direction. At this time, the main axis nozzle 56 is pressed by the tool stocker 80, and is thus positioned above the lower side end position Pd in the Z-axis direction against the biasing force of the biasing member 58 (see FIG. 9).

When the main axis nozzle 56 does not abut on the tool stocker 80, the main axis nozzle 56 is positioned in the lower side end position Pd that is lower in the Z-axis direction than when the main axis nozzle 56 abuts on the tool stocker 80. Thus, during processing of the cutting object 1, during cleaning of the cutting object 1, or during cleaning of the cutting room 120 (as will be described later, the main axis air blower 55 is configured to blow air into the cutting room 120 and to the work holder 20, and is also used for cleaning the cutting room 120), the main axis nozzle 56 can be made to approach a blade portion at a tip end of the cutting tool 6, the cutting object 1, or the bottom wall 120D of the cutting room 120. On the other hand, when the main axis nozzle 56 is in the lower side end position Pd, the main axis nozzle 56 with a large length interferes with the tool stocker 80 and the cutting tool 6 in returning the cutting tool 6 attached to the main shaft 51 to the tool stocker 80 and in attaching the cutting tool 6 in the tool stocker 80 to the main shaft 51. Therefore, in this example embodiment, the main axis air blower 55 is configured to move (contract) upward when the main axis nozzle 56 is pressed upward in the Z-axis direction.

The cut surface 56b of the main axis nozzle 56 is provided for allowing the main axis nozzle 56 to move upward when an object presses the main axis nozzle 56 from a side. When an object presses the cut surface 56b from a side, a portion of a pressing force of the object is converted to a force upward in the Z-axis direction by the cut surface 56b, and the main axis nozzle 56 moves upward.

Note that a configuration in which the main axis nozzle 56 moves in the up-down direction of a Z axis has an effect on a probability that some other object than the tool stocker 80 collides with the main axis nozzle 56. According to the above-described configuration, when some kind of object collides with the main axis nozzle 56, the main axis nozzle 56 moves upward in the Z-axis direction. Therefore, a probability that the main axis nozzle 56 or the object that has collided therewith is damaged can be reduced.

A controller 100 is connected to the holder moving device 30, the main shaft moving device 60, the cutting device 50, or the like, and is configured or programmed to control respective operations thereof. FIG. 11 is a block diagram of the cutting machine 10. As illustrated in FIG. 11, the controller 100 is connected to the X-axis direction driving motor 34 of the holder moving device 30, the A-axis rotating motor 41A and the B-axis rotating motor 41B of the rotating device 40, the spindle 52 and the gripping portion 53 of the cutting device 50, the Y-axis direction driving motor 63Y and the Z-axis direction driving motor 63Z of the main shaft moving device 60, the L-axis direction driving motor 72B of the work changer 70, the top surface air blower 93, the bottom surface air blower 94, the main axis air blower 55, the dust collector 111, and the operation panel 110, and controls respective operations thereof. Note that control of the dust collector 111 may be performed by a controller built in the dust collector 111 or an external device, not by the controller 100.

There is no particular limitation on a configuration of the controller 100. The controller 100 may be, for example, a microcomputer. There is no particular limitation on a hardware configuration of the microcomputer, but the microcomputer may include, for example, an interface (I/F) that receives cutting data or the like from an external device, such as a host computer or the like, a central processing unit (CPU) that executes an instruction of a control program, a read only memory (ROM) that stores a program that is executed by the CPU, a random access memory (RAM) that is used as a working area in which a program is developed, and a storage device, such as a memory or the like, in which the program and various types of data are stored.

As illustrated in FIG. 11, the controller 100 is configured or programmed to include a cutting controller 101, a work replacement controller 102, a tool replacement controller 103, a work cleaning controller 104, a cutting room cleaning controller 105, and a dummy pin cleaning controller 106. The controller 100 is configured or programmed to include the cutting controller 101, the work replacement controller 102, the tool replacement controller 103, the work cleaning controller 104, the cutting room cleaning controller 105, and the dummy pin cleaning controller 106. Each of the cutting controller 101, the work replacement controller 102, the tool replacement controller 103, the work cleaning controller 104, the cutting room cleaning controller 105, and the dummy pin cleaning controller 106 may be realized by one or more processors and may be realized by a circuit. The controller 100 may include some other processing portion, but illustration and description thereof will be omitted herein.

The cutting controller 101 controls the X-axis direction driving motor 34 of the holder moving device 30, the A-axis rotating motor 41A and the B-axis rotating motor 41B of the rotating device 40, the spindle 52 of the cutting device 50, and the Y-axis direction driving motor 63Y and the Z-axis direction driving motor 63Z of the main shaft moving device 60 to cut the cutting object 1 in a designated shape. During cutting of the cutting object 1, the main axis air blower 55 is driven as appropriate, so that cutting powder attached to the cutting object 1, the adapter 5, and the work holder 20 is removed. During cutting of the cutting object 1, the dust collector 111 is driven.

The work replacement controller 102 controls the L-axis direction driving motor 72B of the work changer 70 and the X-axis direction driving motor 34 of the holder moving device 30 to replace the cutting object 1 (the adapter 5 holding the cutting object 1). Thus, the plurality of cutting objects 1 are sequentially processed. The tool replacement controller 103 controls the X-axis direction driving motor 34 of the holder moving device 30, the Y-axis direction driving motor 63Y and the Z-axis direction driving motor 63Z of the main shaft moving device 60, and the gripping portion 53 of the cutting device 50 to replace the cutting tool 6 gripped by the gripping portion 53.

The work cleaning controller 104 executes work cleaning after cutting of the cutting object 1 ends. Herein, work cleaning is cleaning in which air is blown from the main axis air blower 55 to the cutting object 1 held by the work holder 20 to remove cutting powder attached to the cutting object 1 and is also cleaning performed on the cutting object 1. The work cleaning controller 104 performs, as work cleaning, cleaning of the cutting object 1, the adapter 5, and the work holder 20 after cutting ends. In this example embodiment, in executing work cleaning by the work cleaning controller 104, the dummy pin 7 (see FIG. 12) is gripped by the gripping portion 53. That is, in a state where the dummy pin 7 is gripped by the gripping portion 53, work cleaning is performed. As illustrated in FIG. 11, the work cleaning controller 104 includes a first blow controller 104A, a first attitude controller 104B, a first moving controller 104C, and an inversion controller 104D. The work cleaning controller 104 is configured or programmed to include the first blow controller 104A, the first attitude controller 104B, the first moving controller 104C, and the inversion controller 104D.

The first blow controller 104A controls, after cutting of the cutting object 1 ends, the main axis air blower 55 to blow air to the work holder 20. The first attitude controller 104B controls the rotating device 40 after cutting of the cutting object 1 ends and before the main axis air blower 55 blows air in accordance with control of the first blow controller 104A to control the attitude of the work holder 20 such that two surfaces (the first surface 1A and the second surface 1B) of the cutting object 1 that are opposed to each other intersect with the air blowing direction of the main axis air blower 55 at a predetermined angle. In this example embodiment, the predetermined angle is 90 degrees. However, the angle between the air blowing direction of the main axis air blower 55 and each of the two surfaces 1A and 1B of the cutting object 1 that are opposed to each other is not limited to 90 degrees. The first attitude controller 104B controls the rotating device 40 after cutting of the cutting object 1 ends and before the main axis air blower 55 blows air in accordance with control of the first blow controller 104A to control the attitude of the work holder 20 such that the first surface 1A of the cutting object 1 faces the main axis nozzle 56. Thus, the first surface 1A of the cutting object 1 is cleaned.

The first moving controller 104C controls, while the main axis air blower 55 blows air in accordance with control of the first blow controller 104A, the holder moving device 30 and the Y-axis direction moving device 60Y to move the position of the main axis nozzle 56 relative to the work holder 20. Thus, a position of the work holder 20 where air is blown is moved. The holder moving device 30 and the Y-axis direction moving device 60Y function as moving devices that move the position of the main axis nozzle 56 relative to the work holder 20. In this example embodiment, the first moving controller 104C moves the position of the main axis nozzle 56 relative to the work holder 20 such that a moving path of the main axis nozzle 56 relative to the work holder 20 draws a scanning line.

The inversion controller 104D controls the rotating device 40 in middle of air blowing by the main axis air blower 55 in accordance with control of the first blow controller 104A to change the attitude of the work holder 20 such that the second surface 1B of the cutting object 1 faces the main axis nozzle 56. Thus, after cleaning of the first surface 1A of the cutting object 1, the second surface 1B is cleaned. The dust collector 111 is driven during work cleaning.

The cutting room cleaning controller 105 performs cleaning on the cutting room 120 after cutting and work cleaning end. However, the cutting room cleaning controller 105 is not prohibited to perform cleaning on the cutting room 120 before work cleaning, as long as cutting has already ended. As illustrated in FIG. 11, the cutting room cleaning controller 105 is configured or programmed to include a second blow controller 105A, a second attitude controller 105B, and a second moving controller 105C. The cutting room cleaning controller 105 is configured or programmed to include the second blow controller 105A, the second attitude controller 105B, and the second moving controller 105C.

The second blow controller 105A controls, after cutting of the cutting object 1 ends, the main axis air blower 55 to blow air into the cutting room 120. The second attitude controller 105B controls the rotating device 40 after cutting of the cutting object 1 ends (herein, furthermore, after work cleaning by control of the work cleaning controller 104) and before the main axis air blower 55 blows air in accordance with control of the second blow controller 105A to cause the attitude of the work holder 20 to be a preset attitude. Note that control of the main axis air blower 55 in accordance with the first blow controller 104A and control of the main axis air blower 55 in accordance with control of the second blow controller 105A may be continuously performed. That is, air blowing may be continued between work cleaning and cutting room cleaning.

In this example embodiment, the preset attitude of the work holder 20 is an attitude in which the two surfaces 1A and 1B of the cutting object 1 held by the work holder 20 that are opposed to each other are inclined with respect to the bottom wall 120D of the cutting room 120. More specifically, the preset attitude of the work holder 20 is an attitude in which the two surfaces 1A and 1B of the cutting object 1 held by the work holder 20 that are opposed to each other are downwardly inclined toward the front side. Thus, air blown from the main axis air blower 55 flows along the cutting object 1 and the adapter 5 held by the work holder 20 and mainly moves diagonally downward toward the front side. In cleaning of the cutting room 120 according to this example embodiment, by controlling the attitude of the work holder 20, a direction in which air flows in the cutting room 120 is controlled.

The second moving controller 105C controls, while the main axis air blower 55 blows air in accordance with control of the second blow controller 105A, the Y-axis direction moving device 60Y to move the main axis nozzle 56 to left or right. Thus, a wind flow directing diagonally downward toward the front side generated by controlling the attitude of the work holder 20 moves to left or right. Thus, cleaning of the cutting room 120 proceeds to left or right.

In cutting room cleaning, the second blow controller 105A also controls the top surface air blower 93 and the bottom surface air blower 94 to cause them to blow air. Specifically, the second blow controller 105A controls the top surface air blower 93 and the bottom surface air blower 94 to cause them to blow air from the top surface nozzle 93N and the bottom surface nozzle 94N, and then, controls the main axis air blower 55 to blow air into the cutting room 120. Furthermore, the second blow controller 105A controls, after controlling the main axis air blower 55 to blow air into the cutting room 120, the top surface air blower 93 and the bottom surface air blower 94 to cause them to blow air. The second attitude controller 105B may be configured to change a direction of wind once or multiple times by changing the attitude of the work holder 20 once or multiple times in middle of cutting room cleaning. The dust collector 111 is driven also during cutting room cleaning.

Incidentally, in executing work cleaning by the work cleaning controller 104 described above, air from the main axis air blower 55 is blown to the cutting object 1, so that cutting powder attached to the cutting object 1 is removed. In work cleaning, cutting powder can scatter in the cutting room 120. In such a case, in order to reduce or prevent entrance of cutting powder into the gripping portion 53, as described above, the dummy pin 7 is gripped by the gripping portion 53 while work cleaning is executed. As described above, the dummy pin 7 is gripped by the gripping portion 53 during work cleaning, and therefore, cutting powder can be attached to the dummy pin 7.

Therefore, in this example embodiment, dummy pin cleaning that is cleaning on the dummy pin 7 is executed. Dummy pin cleaning is cleaning performed to remove cutting powder attached to the dummy pin 7 gripped by the gripping portion 53.

FIG. 12 is a perspective view illustrating the dummy pin 7. The dummy pin 7 illustrated in FIG. 12 is different from the cutting tool 6 and is not used in cutting the cutting object 1. Basically, the dummy pin 7 is gripped by the gripping portion 53 (see FIG. 9) in other times than when the gripping portion 53 grips the cutting tool 6. The dummy pin 7 is gripped by the gripping portion 53 during a standby time, during non-cutting processing, such as, cleaning, such as work cleaning, cutting room cleaning, or the like, or the like. The dummy pin 7 is gripped by the gripping portion 53 to prevent cutting powder from entering the inside of the gripping portion 53 while cutting is not performed. For example, a length of the dummy pin 7 is smaller than that of the cutting tool 6.

The gripping portion 53 of the main shaft 51 in the cutting device 50 selectively grips one of the cutting tool 6 and the dummy pin 7. During cutting of the cutting object 1 the dummy pin 7 is inserted in the dummy storing hole 88 (see FIG. 8) of the tool stocker 80 and is stored.

There is no particular limitation on a configuration of the dummy pin 7. In this example embodiment, as illustrated in FIG. 12, the dummy pin 7 includes a stick-shaped portion 7a and a dummy contact portion 7b. The stick-shaped portion 7a has a stick-shaped shape extending in the Z-axis direction. The stick-shaped portion 7a is a portion gripped by the gripping portion 53 and, herein, is directly gripped by the gripping portion 53. The dummy contact portion 7b is connected to a lower end of the stick-shaped portion 7a (specifically, a lower end thereof in the Z-axis direction). In this example embodiment, a shape of the dummy contact portion 7b is a disk shape (in other words, a columnar shape), but there is no particular limitation on the shape of the dummy contact portion 7b. A lateral cross-sectional area of the dummy contact portion 7b is larger than a lateral cross-sectional area of the stick-shaped portion 7a.

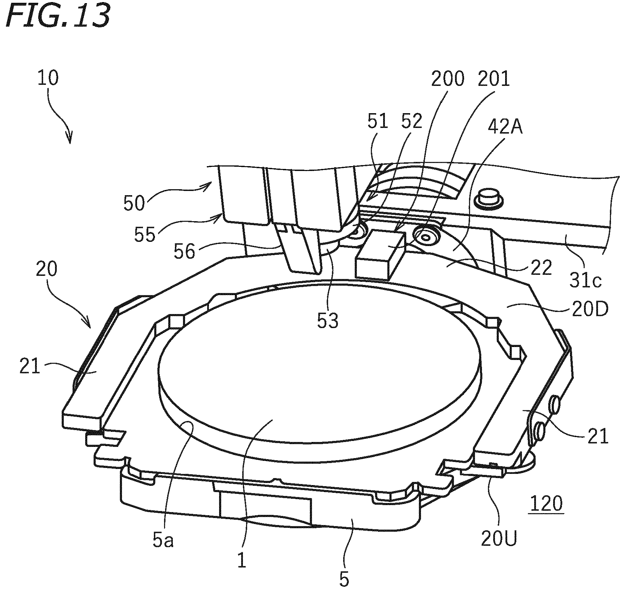

In this example embodiment, the dummy contact portion 7b incudes a dummy contact surface 7c. The dummy contact surface 7c contacts a contact body 200 (see FIG. 13) that will be described later. Herein, the dummy contact surface 7c defines a lower surface of the dummy contact portion 7b. The dummy contact surface 7c is a flat surface and is a plane that extends in the X-axis direction and the Y-axis direction. The dummy contact surface 7c has a larger area than the lateral cross-sectional area of the stick-shaped portion 7a.

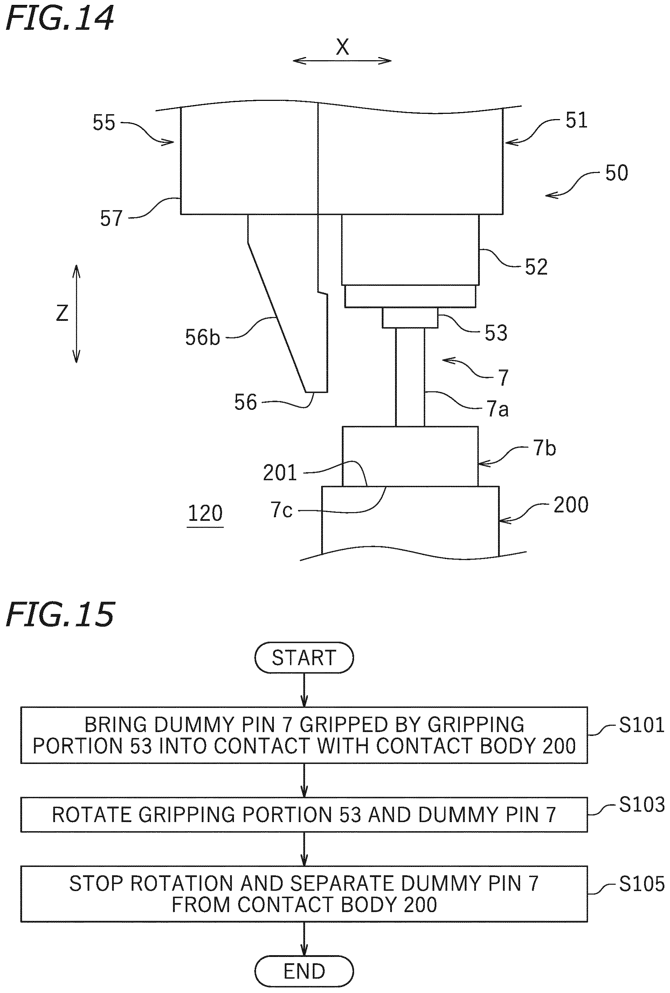

FIG. 13 is a perspective view illustrating the work holder 20 when being rotated from a home attitude by 180 degrees around an A axis. FIG. 14 is a side view around the tip end portion of the cutting device 50 during dummy pin cleaning, illustrating a state where the dummy pin 7 is in contact with the contact body 200. In this example embodiment, as illustrated in FIG. 13, the cutting machine 10 includes the contact body 200 that is used in dummy pin cleaning. As illustrated in FIG. 14, the contact body 200 can contact the dummy pin 7 gripped by the gripping portion 53. As illustrated in FIG. 13, the contact body 200 is arranged in the cutting room 120 formed in the housing 11 (see FIG. 1). Herein, the contact body 200 is arranged in a range in the cutting room 120 in which the dummy pin 7 gripped by the gripping portion 53 can contact the contact body 200. The contact body 200 may be provided in a position in which the contact body 200 and the main shaft 51 (for example, the spindle 52, the gripping portion 53, or the like) do not interfere with each other during cutting.

In this example embodiment, the contact body 200 is provided in the work holder 20 arranged in the cutting room 120. However, the contact body 200 may not be provided in the work holder 20, and may be provided in a range in the cutting room 120 in which the dummy pin 7 gripped by the gripping portion 53 can contact the contact body 200. Herein, the contact body 200 is provided at the coupling portion 22 in a rear portion of the work holder 20. Specifically, the contact body 200 is provided in a position further forward than the rotating shaft 42A around the A axis in the central portion of the coupling portion 22.

As described above, the work holder 20 is configured to be rotated around a B axis by the B-axis rotating device 40B (see FIG. 4) and to be rotated around the A axis by the A-axis rotating device 40A (see FIG. 5). In this example embodiment, the attitude of the work holder 20 while cutting is not performed is referred to as the home attitude. The home attitude is an attitude of the work holder 20 while the work holder 20 is not rotated around the A axis and the B axis, and is the attitude of the work holder 20 during a standby time. FIG. 5 is a plan view illustrating the work holder 20 in the home attitude. As illustrated in FIG. 5, the work holder 20 includes a front surface 20U positioned in an upper side in the home attitude and a back surface 20D positioned in a lower side in the home attitude. The front surface 20U forms an upper surface of the work holder 20 in the home attitude. The back surface 20D forms a lower surface of the work holder 20 in the home attitude. The back surface 20D is opposed to the front surface 20U and is an opposite surface to the front surface 20U. As illustrated in FIG. 13, in the work holder 20 that has rotated from the home attitude around the A-axis by 180 degrees, respective positions of the front surface 20U and the back surface 20D are reversed and the back surface 20D is positioned over the front surface 20U. In this example embodiment, the contact body 200 is provided on the back surface 20D of the work holder 20. Specifically, the contact body 200 is provided on the back surface 20D in the coupling portion 22 of the work holder 20.

Note that there is no particular limitation on a material of which the contact body 200 is formed, as long as cutting powder attached to the dummy pin 7 can be removed when the dummy pin 7 rotates with the contact body 200 in contact with the dummy pin 7. For example, the contact body 200 is formed of a porous material, and, herein, is a sponge. For example, in a case where the dummy pin 7 is brought into contact with the contact body 200 at a low revolution, the contact body 200 may be formed of rubber. In this example embodiment, the contact body 200 has a rectangular parallelepiped shape. However, there is no particular limitation on a shape of the contact body 200.

In this example embodiment, the contact body 200 includes a contact surface 201. As illustrated in FIG. 14, the contact surface 201 contacts the dummy contact surface 7c of the dummy pin 7 gripped by the gripping portion 53 during dummy pin cleaning. The contact surface 201 forms a lower surface of the contact body 200 when the work holder 20 is in the home attitude. When the work holder 20 in the home attitude rotates around the A axis by 180 degrees or rotates around the B axis by 180 degrees, the contact surface 201 is an upper surface of the contact body 200 and is opposed to the dummy contact surface 7c of the dummy pin 7 gripped by the gripping portion 53. The contact surface 201 is a flat surface. The contact surface 201 has a larger area than that of the dummy contact surface 7c of the dummy pin 7. The contact surface 201 has an area that is large enough to allow the entire dummy contact surface 7c to contact the contact surface 201 at a time. The contact surface 201 has a quadrangular shape (herein, a rectangular parallelepiped shape), but may have a circular shape. There is no particular limitation on a shape of the contact surface 201.

In this example embodiment, the contact body 200 is a consumable. Therefore, the contact body 200 is replaceable and is removably attached to the work holder 20. Note that there is no particular limitation on a method for attaching the contact body 200 to the work holder 20. In this example embodiment, the contact body 200 is attached to the work holder 20 with a double-sided tape and can be removed from the work holder 20.

In this example embodiment, as illustrated in FIG. 11, the controller 100 includes the dummy pin cleaning controller 106. The dummy pin cleaning controller 106 is configured or programmed to execute dummy pin cleaning described above. As illustrated in FIG. 14, in a state where the dummy pin 7 gripped by the gripping portion 53 is in contact with the contact body 200, the dummy pin cleaning controller 106 executes dummy pin cleaning by rotating the dummy pin 7 together with the gripping portion 53 (herein, around the Z axis) by the spindle 52. In this example embodiment, in executing dummy pin cleaning, the dummy contact surface 7c of the dummy pin 7 is brought into contact with the contact body 200 and then the dummy pin 7 is rotated. Thus, cutting powder attached to the dummy contact surface 7c in the dummy pin 7 can be scraped off by the contact body 200 and thus can be removed.

Note that the inventor of example embodiments of the present disclosure discovered that not much cutting powder is attached to a side surface of the dummy pin 7 gripped by the gripping portion 53 (for example, a side surface of the stick-shaped portion 7a and a side surface of the dummy contact portion 7b), for example, after execution of work cleaning. Therefore, in dummy pin cleaning, the side surface of the dummy pin 7 is not brought into contact with the contact body 200 and, the inventor considers that, for example, even when cutting powder is attached to the side surface of the dummy pin 7, the cutting powder can fall off due to a centrifugal force generated when the dummy pin 7 rotates. However, in dummy pin cleaning, the gripping portion 53 may be rotated around an axis line in a state where the side surface of the dummy pin 7 gripped by the gripping portion 53 is brought into contact with the contact body 200.

Next, steps in which dummy pin cleaning according to this example embodiment is executed will be described in detail following a flowchart of FIG. 15. In this example embodiment, as illustrated in FIG. 11, the dummy pin cleaning controller 106 is configured or programmed to include a contact controller 106A, a rotation controller 106B, and a separation controller 106C. The dummy pin cleaning controller 106 is configured or programmed to include the contact controller 106A, the rotation controller 106B, and the separation controller 106C.

In this example embodiment, after cutting of the cutting object 1 held by the work holder 20 ends, in a state where the dummy pin 7 is gripped by the gripping portion 53, air is blown to the cutting object 1 held by the work holder 20 from the main axis air blower 55 by the work cleaning controller 104 to execute work cleaning, and then, Step S101 in FIG. 15 is executed.

In Step S101, the contact controller 106A in FIG. 11 brings the dummy pin 7 gripped by the gripping portion 53 into contact with the contact body 200, as illustrated in FIG. 14. Herein, the contact controller 106A stops the spindle 52 and, in a state where the gripping portion 53 and the dummy pin 7 are not rotated, brings the dummy contact surface 7c of the dummy pin 7 into contact with the contact surface 201 of the contact body 200. Specifically, for example, the back surface 20D of the work holder 20 does not face upward and the contact surface 201 of the contact body 200 is not arranged to face the dummy contact surface 7c of the dummy pin 7 in a surface-to-surface manner in some cases. In this case, the contact controller 106A controls the A-axis rotating device 40A (see FIG. 5) or the B-axis rotating device 40B (see FIG. 4) such that the contact surface 201 of the contact body 200 and the dummy contact surface 7c of the dummy pin 7 face to each other in a surface-to-surface manner (for example, to be opposed to each other in parallel) and rotates the work holder 20 around the A axis or around the B axis.

Thereafter, the contact controller 106A performs control such that the contact surface 201 of the contact body 200 is arranged directly under the dummy contact surface 7c of the dummy pin 7 gripped by the gripping portion 53 in the Z-axis direction. Herein, the contact controller 106A controls the holder moving device 30 to move the work holder 20 in the X-axis direction and controls the main shaft moving device 60 to move the main shaft 51 in the Y-axis direction, thereby arranging the contact body 200 directly under the dummy contact surface 7c in the Z-axis direction. Then, the contact controller 106A controls the main shaft moving device 60 to move the main shaft 51 downward in the Z-axis direction, thereby moving the dummy pin 7 together with the gripping portion 53 downward in the Z-axis direction. Thus, the dummy contact surface 7c of the dummy pin 7 and the contact surface 201 of the contact body 200 gradually approach each other in a state where the dummy contact surface 7c and the contact surface 201 are in parallel to be brought into contact with each other such that the dummy contact surface 7c and the contact surface 201 are in parallel, as illustrated in FIG. 14. When the dummy contact surface 7c and the contact surface 201 of the contact body 200 contact each other, the contact controller 106A stops the main shaft moving device 60 to stop movement of the main shaft 51 in the Z-axis direction.

Note that there is no particular limitation on an order in which the contact controller 106A performs respective controls of the A-axis rotating device 40A, the B-axis rotating device 40B, the holder moving device 30, and the main shaft moving device 60. Some or all of respective controls of the A-axis rotating device 40A, the B-axis rotating device 40B, the holder moving device 30, and the main shaft moving device 60 may be simultaneously performed by the contact controller 106A. In this example embodiment, a relative positional relationship between the gripping portion 53 and the contact body 200 is changed by the A-axis rotating device 40A, the B-axis rotating device 40B, the holder moving device 30, and the main shaft moving device 60. Therefore, the A-axis rotating device 40A, the B-axis rotating device 40B, the holder moving device 30, and the main shaft moving device 60 are examples of a position adjuster that changes the relative positional relationship between the gripping portion 53 and the contact body 200.

After control by the contact controller 106A described above, Step S103 in FIG. 15 is executed. In Step S103, the rotation controller 106B in FIG. 11 rotates the dummy pin 7 gripped by the gripping portion 53. Herein, the rotation controller 106B rotates the dummy pin 7 together with the gripping portion 53 by the spindle 52 in a state where the dummy pin 7 gripped by the gripping portion 53 is brought into contact with the contact body 200. At this time, the dummy pin 7 rotates around an axis line that orthogonal to the dummy contact surface 7c (herein, in the Z-axis direction).

In this case, the rotation controller 106B rotates the spindle 52 for a predetermined time at a predetermined revolution speed. There is no particular limitation on the predetermined time and the predetermined revolution speed, and the predetermined time and the predetermined revolution speed are set, as appropriate, to values that allow removal of cutting powder attached to the dummy pin 7. The predetermined time is, for example, 10 seconds, and the predetermined revolution speed is, for example, 24,000 rpm. The predetermined time and the predetermined revolution speed are stored in a memory of the controller 100 in advance. Note that the predetermined revolution speed at which the rotation controller 106B rotates the spindle 52 may be the same as, for example, a revolution speed of the spindle 52 during cutting. The predetermined revolution speed may be higher than the revolution speed of the spindle 52 during cutting and may be lower than the revolution speed of the spindle 52 during cutting.

As described above, after the gripping portion 53 is rotated by the rotation controller 106B, Step S105 in FIG. 15 is executed. In Step S105, the separation controller 106C in FIG. 11 separates the dummy pin 7 from the contact body 200. Herein, the separation controller 106C stops rotation of the spindle 52 to stop rotation of the gripping portion 53. Thereafter, the separation controller 106C separates the dummy pin 7 gripped by the gripping portion 53 from the contact body 200. Herein, the separation controller 106C controls the main shaft moving device 60 to move the gripping portion 53 upward in the Z-axis direction. Thus, the dummy pin 7 gripped by the gripping portion 53 moves upward in the Z-axis direction, and the dummy contact surface 7c of the dummy pin 7 is separated from the contact surface 201 of the contact body 200. In the manner described above, dummy pin cleaning is completed. Note that, in this example embodiment, after dummy pin cleaning ends, cutting room cleaning by the cutting room cleaning controller 105 is executed.

As described above, in this example embodiment, as illustrated in FIG. 3, the cutting machine 10 includes the housing 11, the gripping portion 53, the spindle 52, the contact body 200 (see FIG. 13), the position adjuster, and the controller 100 (see FIG. 11). In the housing 11, the cutting room 120 in which the cutting object 1 is cut is formed. The gripping portion 53 selectively grips one of the cutting tool 6 (see FIG. 9) that cuts the cutting object 1 and the dummy pin 7 (see FIG. 14) that does not cut the cutting object 1 and is arranged in the cutting room 120. The spindle 52 rotates the gripping portion 53 around the axis line (herein, around the Z-axis direction). As illustrated in FIG. 14, the contact body 200 is arranged in the cutting room 120 and can contact the dummy pin 7 gripped by the gripping portion 53. The position adjuster changes the relative positional relationship between the gripping portion 53 and the contact body 200 and is configured of the A-axis rotating device 40A, the B-axis rotating device 40B, the holder moving device 30, and the main shaft moving device 60. The controller 100 is configured or programmed to include the dummy pin cleaning controller 106 (see FIG. 11) that executes dummy pin cleaning by rotating the dummy pin 7 together with the gripping portion 53 by the spindle 52 in a state where the dummy pin 7 gripped by the gripping portion 53 is brought into contact with the contact body 200, as illustrated in FIG. 14.

As described above, the dummy pin cleaning controller 106 of the controller 100 causes the spindle 52 to rotate the dummy pin 7 gripped by the gripping portion 53 in a state where the dummy pin 7 gripped by the gripping portion 53 is brought into contact with the contact body 200. Thus, removal of cutting powder attached to the dummy pin 7 can be facilitated.

For example, in a case where cutting powder is attached to the dummy pin 7, in inserting the dummy pin 7 in the dummy storing hole 88 (see FIG. 8) of the tool stocker 80 to store the dummy pin 7 therein, the cutting powder can enter the dummy storing hole 88 and be deposited in the dummy storing hole 88 in some cases. As a result, because of the cutting powder, the dummy pin 7 cannot be properly stored in the dummy storing hole 88 in some cases. Even in a case where the dummy pin 7 in a state where cutting powder is attached to the dummy pin 7 can be stored in the dummy storing hole 88, in taking out the dummy pin 7 from the dummy storing hole 88, the cutting powder is caught by an edge of the dummy storing hole 88 and the dummy pin 7 is difficult to be removed from the dummy storing hole 88 in some cases. Furthermore, for example, in a case where the dummy contact surface 7c of the dummy pin 7 is brought into contact with the tool length sensor 89 (see FIG. 8) provided in the tool stocker 80, in attaching cutting powder to the dummy pin 7, the cutting powder contacts the tool length sensor 89, so that error detection of the tool length sensor 89 can be caused in some cases.

However, in this example embodiment, dummy pin cleaning is executed to the dummy pin 7 gripped by the gripping portion 53, and thus, the dummy pin 7 from which cutting powder has been removed is stored in the dummy storing hole 88 of the tool stocker 80 and contacts the tool length sensor 89. Therefore, it can be prevented that, because of cutting powder, it becomes difficult to store the dummy pin 7 in the dummy storing hole 88 and it becomes difficult to remove the dummy pin 7 from the dummy storing hole 88 can be prevented. Moreover, error detection of the tool length sensor 89 that can be caused by cutting powder when the dummy pin 7 contacts the tool length sensor 89 can be made less likely to occur.

In this example embodiment, as illustrated in FIG. 3, the cutting machine 10 includes the work holder 20 that is arranged in the cutting room 120 and holds the cutting object 1 and the main axis air blower 55 that blows air to the cutting object 1 held by the work holder 20. As illustrated in FIG. 11, the controller 100 includes the work cleaning controller 104. The work cleaning controller 104 executes, after cutting of the cutting object 1 ends, work cleaning by blowing air to the cutting object 1 held by the work holder 20 from the main axis air blower 55 in a state where the dummy pin 7 is gripped by the gripping portion 53. The dummy pin cleaning controller 106 executes dummy pin cleaning after work cleaning by the work cleaning controller 104. As described above, during work cleaning, the dummy pin 7 is gripped by the gripping portion 53. Therefore, when cutting powder removed from the cutting object 1 or the like during work cleaning scatters in the cutting room 120, the cutting powder can be attached to the dummy pin 7 in some cases. Even in such a case, since dummy pin cleaning is executed after work cleaning, the cutting powder attached to the dummy pin 7 can be removed.

In this example embodiment, as illustrated in FIG. 13, the contact body 200 is provided on the work holder 20. As described above, with the contact body 200 provided on the work holder 20 arranged in the cutting room 120, the contact body 200 can be easily arranged in the cutting room 120. During cutting, the gripping portion 53 is moved to approach the work holder 20. Therefore, with the contact body 200 provided on the work holder 20, the dummy pin 7 gripped by the gripping portion 53 can be brought into contact with the contact body 200 by moving the gripping portion 53 closer to the contact body 200.

In this example embodiment, the work holder 20 includes the pair of pinching arms 21 that pinch the cutting object 1 and the coupling portion 22 that couples the pair of pinching arms 21 together. The contact body 200 is provided on the coupling portion 22. During cutting, the coupling portion 22 does not interfere with the gripping portion 53. Therefore, with the contact body 200 provided on the coupling portion 22 of the work holder 20, the contact body 200 can be caused to hardly interfere with the gripping portion 53 and the cutting tool 6 gripped by the gripping portion 53 during cutting.

In this example embodiment, the work holder 20 includes the front surface 20U that is positioned in the upper side in the attitude (herein, home attitude) of the work holder 20 while cutting is not performed and the back surface 20D that is positioned in the lower side in the attitude of the work holder 20 while cutting is not performed and is opposite to the front surface 20U. As illustrated in FIG. 13, the contact body 200 is provided on the back surface 20D of the work holder 20. Herein, the contact body 200 is not used except for dummy pin cleaning. When the work holder 20 is in the home attitude, the back surface 20D is hardly seen by the user. Therefore, with the contact body 200 provided on the back surface 20D of the work holder 20, the contact body 200 can be arranged in a position that is hardly seen by the user at other times than dummy pin cleaning.

In this example embodiment, the contact body 200 is formed of a porous material. The contact body 200 is, for example, a sponge. Thus, the dummy pin 7 can be made to easily rotate in a state where the dummy pin 7 is brought into contact with the contact body 200. Accordingly, removal of cutting powder attached to the dummy pin 7 can be facilitated by rotating the dummy pin 7 in a state where the dummy pin 7 is brought into contact with the contact body 200.

In this example embodiment, since the dummy pin 7 rotates in a state where the dummy pin 7 is in contact with the contact body 200, the contact body 200 can be shaved during rotation in some cases. Therefore, the contact body 200 is a consumable. Herein, the contact body 200 is configured to be replaceable. Thus, even when the contact body 200 is shaved by the dummy pin 7, the contact body 200 can be replaced with new one.

In this example embodiment, as illustrated in FIG. 12, the dummy pin 7 includes the stick-shaped portion 7a that is gripped by the gripping portion 53 and the dummy contact portion 7b that is connected to the lower end of the stick-shaped portion 7a and includes the dummy contact surface 7c that is flat and has a larger area than the lateral cross-sectional area of the stick-shaped portion 7a. As illustrated in FIG. 14, the dummy pin cleaning controller 106 brings the dummy contact surface 7c of the dummy pin 7 into contact with the contact body 200. The dummy contact surface 7c is a wide and flat surface of the dummy pin 7. Therefore, cutting powder attached to the dummy contact surface 7c can be actively removed by rotating the dummy pin 7 with the dummy contact surface 7c brought into contact with the contact body 200.

In this example embodiment, as illustrated in FIG. 13, the contact body 200 includes the flat contact surface 201. As illustrated in FIG. 14, the dummy pin cleaning controller 106 brings the dummy contact surface 7c of the dummy pin 7 into contact with the contact surface 201 of the contact body 200 such that the dummy contact surface 7c and the contact surface 201 are in parallel to each other. As described above, with the dummy contact surface 7c and the contact surface 201 brought into contact with each other in parallel to each other, a pressure can be uniformly applied to the dummy contact surface 7c from the contact surface 201. Therefore, overall removal of entire cutting powder attached to the dummy contact surface 7c can be facilitated.

In this example embodiment, as illustrated in FIG. 11, the dummy pin cleaning controller 106 is configured or programmed to include the contact controller 106A, the rotation controller 106B, and the separation controller 106C. The contact controller 106A brings the dummy pin 7 gripped by the gripping portion 53 into contact with the contact body 200 in a state where the gripping portion 53 is not rotated in Step S101 in FIG. 15. After control by the contact controller 106A, the rotation controller 106B causes the spindle 52 to rotate the dummy pin 7 together with the gripping portion 53 in a state where the dummy pin 7 gripped by the gripping portion 53 is brought into contact with the contact body 200 in Step S103 in FIG. 15. After control by the rotation controller 106B, the separation controller 106C stops rotation of the gripping portion 53 and separates the dummy pin 7 gripped by the gripping portion 53 from the contact body 200 in Step S105 in FIG. 15. Thus, after the dummy pin 7 is brought into contact with the contact body 200, the dummy pin 7 can be rotated with respect to the contact body 200. Therefore, the contact body 200 can be prevented from being shaved when the dummy pin 7 is brought into contact with the contact body 200 in a state where the dummy pin 7 is rotating.

## Claims

1. A cutting machine (10) comprising:
a housing (11) including a cutting room (120), the cutting machine (10) being configured to cut a cutting object (1) in the cutting room (120);
a cutting tool (6) that is for cutting the cutting object (1) and is in the cutting room;
a dummy pin (7) that does not cut the cutting object (1) and is in the cutting room;
a gripping portion (53) to selectively grip one of the cutting tool (6), and the dummy pin (7);
a spindle (52) to rotate the gripping portion (53) around an axis line;
a contact body (200) in the cutting room (120) and capable of contacting the dummy pin (7) when the dummy pin (7) is gripped by the gripping portion (53);
a position adjuster (40A, 40B, 30, 60) to change a relative positional relationship between the gripping portion (53) and the contact body (200); and
a controller (100); wherein
the controller (100) is configured or programmed to include a dummy pin cleaning controller (160) configured or programmed to execute dummy pin cleaning by causing, in a state where the dummy pin (7) gripped by the gripping portion (53) is brought into contact with the contact body (200), the spindle (52) to rotate the gripping portion (53) and dummy pin (7) gripped by the gripping portion (53).

2. The cutting machine (10) according to claim 1, further comprising:
a work holder (20) in the cutting room (120) and operable to hold the cutting object (1); wherein
the contact body (200) is provided on the work holder (20).

3. The cutting machine (10) according to claim 2, wherein the work holder (20) includes:
a pair of pinching arms (21) to pinch the cutting object (1); and
a coupling portion (22) to couple the pair of the pinching arms (21) with each other; and
the contact body (200) is provided on the coupling portion (22).

4. The cutting machine (10) according to any one of claims 1 to 3, wherein the contact body (200) includes a porous material.

5. The cutting machine (10) according to any one of claims 1 to 4, wherein the contact body (200) includes a sponge.

6. The cutting machine (10) according to any one of claims 1 to 5, wherein the contact body (200) is replaceable.

7. The cutting machine (10) according to any one of claims 1 to 6, wherein the dummy pin (7) includes:
a stick-shaped portion (7a) that is gripped by the gripping portion (53); and
a dummy contact portion (7b) that is connected to a lower end of the stick-shaped portion (7a) and includes a flat dummy contact surface (7c) that is larger than a cross-sectional area of the stick-shaped portion (7a).

8. The cutting machine (10) according to claim 7, wherein the dummy pin cleaning controller (160) is configured or programmed to bring the dummy contact surface (7c) of the dummy pin (7) into contact with the contact body (200).

9. The cutting machine (10) according to claim 7 or 8, wherein
the contact body (200) includes a flat contact surface (201); and
the dummy pin cleaning controller (160) is configured or programmed to bring the dummy contact surface (7c) of the dummy pin (7) into contact with the contact surface (201) of the contact body (200) such that the dummy contact surface (7c) and the contact surface (201) are parallel or substantially parallel to each other.

10. The cutting machine (10) according to any one of claims 1 to 9, wherein
the dummy pin cleaning controller (160) is configured or programmed to include:
a contact controller (106A) configured or programmed to bring the dummy pin (7) gripped by the gripping portion (53) into contact with the contact body (200) in a state where the gripping portion (53) is not rotated;
a rotation controller (106B) configured or programmed to, after control by the contact controller (106A), cause, in a state where the dummy pin (7) gripped by the gripping portion (53) is brought into contact with the contact body (200), the spindle (52) to rotate the gripping portion (53) and the dummy pin (7) gripped by the gripping portion (53); and
a separation controller (106C) configured or programmed to, after control by the rotation controller (106B), stop rotation of the gripping portion (53) and separate the dummy pin (7) gripped by the gripping portion (53) from the contact body (200).

11. The cutting machine (10) according to claim 1, further comprising:
a work holder (20) in the cutting room (120) and operable to hold the cutting object (1); and
an air blower (55) to blow air to the cutting object (1) held by the work holder (20); wherein
the controller (100) is configured or programmed to include a work cleaning controller (104) configured or programmed to, after cutting of the cutting object (1) ends, execute work cleaning by blowing air from the air blower (55) to the cutting object (1) held by the work holder (20) in a state there the dummy pin (7) is gripped by the gripping portion (53); and
the dummy pin cleaning controller (160) is configured or programmed to execute the dummy pin (7) cleaning after the work cleaning by the work cleaning controller (104).

## Patentansprüche

1. Eine Schneidemaschine (10) umfassend:
ein Gehäuse (11) mit einem Schneidraum (120), wobei die Schneidemaschine (10) konfiguriert ist ein Schneidobjekt (1) im Schneidraum (120) zu schneiden;
ein Schneidwerkzeug (6) zum Schneiden des Schneidobjekts (1), das sich im Schneidraum befindet;
einen Dummy-Stift (7), der das Schneidobjekt (1) nicht schneidet und sich im Schneidraum befindet;
einen Greifabschnitt (53) zum selektiven Greifen eines des Schneidwerkzeugs (6) und des Dummy-Stifts (7);
eine Spindel (52) zum Drehen des Greifabschnitts (53) um eine Achse;
einen Kontaktkörper (200) im Schneidraum (120), der mit dem Dummy-Stift (7) in Kontakt kommen kann, wenn der Dummy-Stift (7) vom Greifabschnitt (53) gegriffen wird;
einen Positionsjustierer (40A, 40B, 30, 60) zum Ändern einer relativen Positionsbeziehung zwischen dem Greifabschnitt (53) und dem Kontaktkörper (200); und
eine Steuereinrichtung (100); wobei
die Steuereinheit (100) so konfiguriert oder programmiert ist, dass sie eine Dummy-Stift-Reinigungssteuereinheit (160) umfasst, die so konfiguriert oder programmiert ist, dass sie eine Dummy-Stift-Reinigung durchführt, indem sie in einem Zustand, in dem der von dem Greifabschnitt (53) gegriffene Dummy-Stift (7) mit dem Kontaktkörper (200) in Kontakt gebracht wird, die Spindel (52) in Drehung versetzt, um den Greifabschnitt (53) und den von dem Greifabschnitt (53) gegriffenen Dummy-Stift (7) zu drehen.

2. Die Schneidemaschine (10) gemäß Anspruch 1, ferner umfassend:
einen Werkstückhalter (20) im Schneidraum (120), der zum Halten des Schneidobjekts (1) betätigbar ist; wobei
der Kontaktkörper (200) an dem Werkstückhalter (20) angeordnet ist.

3. Die Schneidemaschine (10) gemäß Anspruch 2, wobei der Werkstückhalter (20) umfasst:
ein Paar Klemmarme (21) um das Schneidobjekt (1) einzuklemmen; und
einen Kopplungsabschnitt (22) um das Paar Klemmarme (21) miteinander zu koppeln; und
der Kontaktkörper (200) an dem Kopplungsabschnitt (22) angeordnet ist.

4. Die Schneidemaschine (10) gemäß einem der Ansprüche 1 bis 3, wobei der Kontaktkörper (200) ein poröses Material umfasst.

5. Die Schneidemaschine (10) gemäß einem der Ansprüche 1 bis 4, wobei der Kontaktkörper (200) einen Schwamm umfasst.

6. Die Schneidemaschine (10) gemäß einem der Ansprüche 1 bis 5, wobei der Kontaktkörper (200) austauschbar ist.

7. Die Schneidemaschine (10) gemäß einem der Ansprüche 1 bis 6, wobei der Dummy-Stift (7) umfasst:
einen stabförmigen Abschnitt (7a), der von dem Greifabschnitt (53) erfasst wird; und
eine Dummy-Kontaktvorrichtung (7b), die mit einem unteren Ende des stabförmigen Abschnitts (7a) verbunden ist und eine flache Dummy-Kontaktfläche (7c) umfasst, die größer ist als eine Querschnittsfläche des stabförmigen Abschnitts (7a).

8. Die Schneidemaschine (10) gemäß Anspruch 7, wobei die Dummy-Stift-Reinigungssteuerung (160) so konfiguriert oder programmiert ist, dass sie die Dummy-Kontaktfläche (7c) des Dummy-Stifts (7) mit dem Kontaktkörper (200) in Kontakt bringt.

9. Die Schneidemaschine (10) gemäß Anspruch 7 oder 8, wobei
der Kontaktkörper (200) eine flache Kontaktfläche (201) aufweist; und
die Dummy-Stift-Reinigungssteuerung (160) so konfiguriert oder programmiert ist, dass sie die Dummy-Kontaktfläche (7c) des Dummy-Stifts (7) mit der Kontaktfläche (201) des Kontaktkörpers (200) in Kontakt bringt, so dass die Dummy-Kontaktfläche (7c) und die Kontaktfläche (201) parallel oder im Wesentlichen parallel zueinander sind.

10. Die Schneidemaschine (10) gemäß einem der Ansprüche 1 bis 9, wobei
die Dummy-Stift-Reinigungssteuerung (160) so konfiguriert oder programmiert ist, dass sie Folgendes umfasst:
eine Kontaktsteuerung (106A), die so konfiguriert oder programmiert ist, dass sie den von dem Greifabschnitt (53) gegriffenen Dummy-Stift (7) in einem Zustand, in dem der Greifabschnitt (53) nicht gedreht wird, mit dem Kontaktkörper (200) in Kontakt bringt;
eine Drehsteuerung (106B), die so konfiguriert oder programmiert ist, dass sie nach der Steuerung durch die Kontaktsteuerung (106A) in einem Zustand, in dem der von dem Greifabschnitt (53) gegriffene Dummy-Stift (7) mit dem Kontaktkörper (200) in Kontakt gebracht wird, die Spindel (52) den Greifabschnitt (53) und den von dem Greifabschnitt (53) gegriffenen Dummy-Stift (7) dreht; und
eine Trennsteuerung (106C), die so konfiguriert oder programmiert ist, dass sie nach Steuerung durch die Drehsteuerung (106B) die Drehung des Greifabschnitts (53) stoppt und den vom Greifabschnitt (53) gehaltenen Dummy-Stift (7) vom Kontaktkörper (200) trennt.

11. Die Schneidemaschine (10) gemäß Anspruch 1, ferner umfassend:
einen Werkstückhalter (20) im Schneidraum (120), der betätigbar ist, um das Schneidobjekt (1) zu halten; und
ein Luftgebläse (55) zum Blasen von Luft zu dem von dem Werkstückhalter (20) gehaltenen Schneidobjekt (1); wobei
die Steuerung (100) so konfiguriert oder programmiert ist, dass sie eine Werkstückreinigungssteuerung (104) umfasst, die so konfiguriert oder programmiert ist, dass sie nach Beendigung des Schneidens des Schneidobjekts (1) eine Werkstückreinigung durchführt, indem sie Luft aus dem Luftgebläse (55) auf das vom Werkstückhalter (20) gehaltene Schneidobjekt (1) bläst, in einem Zustand, in dem der Dummy-Stift (7) vom Greifabschnitt (53) gegriffen wird, und
die Dummy-Stift-Reinigungssteuerung (160) so konfiguriert oder programmiert ist, dass sie die Reinigung des Dummy-Stifts (7) nach der Werkstückreinigung durch die Werkstückreinigungssteuerung (104) ausführt.

## Revendications

1. Machine de découpe (10) comprenant :
un boîtier (11) comprenant une chambre de découpe (120), la machine de découpe (10) étant configurée pour découper un objet à découper (1) dans la chambre de découpe (120) ;
un outil de découpe (6) destiné à découper l'objet à découper (1) et situé dans la chambre de découpe ;
une goupille factice (7) qui ne coupe pas l'objet à découper (1) et se trouve dans la chambre de découpe ;
une partie de préhension (53) pour saisir sélectivement l'outil de découpe (6),
et la goupille factice (7) ;
une broche (52) pour faire tourner la partie de préhension (53) autour d'un axe ;
un corps de contact (200) dans la chambre de coupe (120) et capable d'entrer en contact avec la goupille factice (7) lorsque la goupille factice (7) est saisie par la partie de préhension (53) ;
un dispositif de réglage de position (40A, 40B, 30, 60) pour modifier la relation de position relative entre la partie de préhension (53) et le corps de contact (200) ; et
un dispositif de commande (100) ; dans lequel
le dispositif de commande (100) est configuré ou programmé pour inclure un dispositif de commande de nettoyage de goupille factice (160) configuré, ou programmé, pour exécuter le nettoyage de la goupille factice, lorsque la goupille factice (7) saisie par la partie de préhension (53) est mise en contact avec le corps de contact (200), et commander à la broche (52) de faire tourner la partie de préhension (53) et la goupille factice (7) saisie par la partie de préhension (53).

2. Machine de découpe (10) selon la revendication 1, comprenant en outre :
un support de pièce (20) dans la chambre de découpe (120) et pouvant être actionné pour maintenir l'objet à découper (1) ; dans laquelle le corps de contact (200) est prévu sur le support de pièce (20).

3. Machine de découpe (10) selon la revendication 2, dans laquelle le support de pièce (20) comprend :
une paire de bras de pincement (21) pour pincer l'objet à couper (1) ; et
une partie d'accouplement (22) pour accoupler la paire de bras de pincement (21) l'un à l'autre ; et
le corps de contact (200) est prévu sur la partie d'accouplement (22).

4. Machine de découpe (10) selon l'une quelconque des revendications 1 à 3, dans laquelle le corps de contact (200) comprend un matériau poreux.

5. Machine de découpe (10) selon l'une quelconque des revendications 1 à 4, dans laquelle le corps de contact (200) comprend une éponge.

6. Machine de découpe (10) selon l'une quelconque des revendications 1 à 5, dans laquelle le corps de contact (200) est remplaçable.

7. Machine de découpe (10) selon l'une quelconque des revendications 1 à 6, dans laquelle la goupille factice (7) comprend :
une partie en forme de bâton (7a) qui est saisie par la partie de préhension (53) ; et
une partie de contact factice (7b) qui est reliée à une extrémité inférieure de la partie en forme de bâton (7a) et comprend une surface de contact factice plate (7c) qui est plus grande qu'une section transversale de la partie en forme de bâton (7a).

8. Machine de découpe (10) selon la revendication 7, dans laquelle le dispositif de commande de nettoyage de goupille factice (160) est configuré, ou programmé, pour amener la surface de contact factice (7c) de la goupille factice (7) en contact avec le corps de contact (200).

9. Machine de découpe (10) selon les revendications 7 ou 8, dans laquelle
le corps de contact (200) comprend une surface de contact plate (201) ; et
le dispositif de commande de nettoyage de goupilles factices (160) est configuré ou programmé pour amener la surface de contact factice (7c) de la goupille factice (7) en contact avec la surface de contact (201) du corps de contact (200) de telle sorte que la surface de contact factice (7c) et la surface de contact (201) soient parallèles ou sensiblement parallèles l'une à l'autre.

10. Machine de découpe (10) selon l'une quelconque des revendications 1 à 9, dans laquelle
le dispositif de commande de nettoyage de goupilles factices (160) est configuré ou programmé pour comprendre :
un dispositif de commande de contact (106A) configuré ou programmé pour amener la goupille factice (7) saisie par la partie de préhension (53) en contact avec le corps de contact (200) dans un état où la partie de préhension (53) n'est pas tournée ;
un dispositif de commande de rotation (106B) configuré ou programmé pour, après intervention du dispositif de commande de contact (106A), lorsque la goupille factice (7) saisie par la partie de préhension (53) est mise en contact avec le corps de contact (200), que la broche (52) fasse tourner la partie de préhension (53) et la goupille factice (7) saisie par la partie de préhension (53) ; et
un dispositif de commande de séparation (106C) configuré ou programmé pour, après intervention du dispositif de commande de rotation (106B), arrêter la rotation de la partie de préhension (53) et séparer la goupille factice (7) saisie par la partie de préhension (53) du corps de contact (200).

11. Machine de découpe (10) selon la revendication 1, comprenant en outre :
un support de pièce (20) dans la chambre de découpe (120) et pouvant être actionné pour maintenir l'objet à découper (1) ; et
un ventilateur (55) pour souffler de l'air vers l'objet à couper (1) maintenu par le support de pièce (20) ; dans laquelle
le dispositif de commande (100) est configuré, ou programmé, pour inclure un dispositif de commande de nettoyage de pièce (104) configuré, ou programmé, après la fin de la découpe de l'objet à découper (1), pour nettoyer la pièce en soufflant de l'air provenant du ventilateur (55) vers l'objet à découper (1) maintenu par le porte-pièce (20) dans un état où la goupille factice (7) est saisie par la partie de préhension (53) ; et
le dispositif de commande de nettoyage de la goupille factice (160) est configuré ou programmé pour exécuter le nettoyage de la goupille factice (7) après le nettoyage de la pièce par le dispositif de commande de nettoyage de pièce (104).
